# EUROPEAN PATENT APPLICATION

(11) **EP 4 545 264 A1**
(43) Date of publication of application: **30.04.2025**
(21) Application number: 23830250.9
(22) Date of filing: 27.06.2023
(51) Int. Cl.: B28D 5/00

(54) **CUTTING APPARATUS**

(30) Priority: 27.06.2022 CN 202221621560 U; 27.06.2022 CN 202210737390; 27.06.2022 CN 202210737395; 27.06.2022 CN 202221625024 U; 27.06.2022 CN 202210737377; 27.06.2022 CN 202221621561 U; 27.06.2022 CN 202221621549 U; 27.06.2022 CN 202221622388 U; 27.06.2022 CN 202221622377 U; 31.03.2023 CN 202320691829 U; 31.03.2023 CN 202320691828 U; 31.03.2023 CN 202320691830 U; 31.03.2023 CN 202320691831 U; 31.03.2023 CN 202320691832 U; 31.03.2023 CN 202320691885 U; 31.03.2023 CN 202320691888 U; 31.03.2023 CN 202320691889 U
(71) Applicant: Qingdao Gaoce Technology Co., Ltd, Qingdao, Shandong 266114 (CN)
(72) Inventor: SUN, Chengzheng, Qingdao, Shandong 266114 (CN); XIE, Peiyu, Qingdao, Shandong 266114 (CN); GONG, Yunqing, Qingdao, Shandong 266114 (CN); WANG, Xiaowei, Qingdao, Shandong 266114 (CN); LI, Jinpeng, Qingdao, Shandong 266114 (CN); HE, Hongzhu, Qingdao, Shandong 266114 (CN); SONG, Zhengtai, Qingdao, Shandong 266114 (CN); LIU, Jiaming, Qingdao, Shandong 266114 (CN); CAO, Maozhi, Qingdao, Shandong 266114 (CN); DUAN, Jingbo, Qingdao, Shandong 266114 (CN)
(74) Representative: Winter, Brandl - Partnerschaft mbB
(86) International application number: PCT/CN2023/102759
(87) International publication number: WO 2024/002073

(57) **Abstract**

Provided in the present application is a cutting apparatus, comprising a cutting zone assembly and a winding zone assembly. The cutting zone assembly comprises a cutting zone frame, wherein a cutting device is provided at an upper portion of the cutting zone frame, and a feeding device is provided at a lower portion thereof. The feeding device is used for supporting a member to be cut and driving said member to move upwards, such that said member is cut by the cutting device. The cutting device comprises an upper cutting-roller group and a lower cutting-roller group, which are arranged vertically, wherein the lower cutting-roller group comprises at least two cutting main rollers, the at least two cutting main rollers are arranged in parallel and spaced apart from each other, and a space for said member to pass through is reserved between two adjacent cutting main rollers; and the upper cutting-roller group comprises at least one cutting main roller, which is parallel to the cutting main rollers in the lower cutting-roller group. A cutting wire is wound around each cutting main roller to form a cutting wire mesh. The winding zone assembly is used for providing power for unwinding and winding the cutting wire, and is used for guiding the cutting wire from the winding zone assembly to the cutting main rollers. The cutting apparatus provided in the present application has relatively high cutting stability.

## Description

### FIELD OF THE INVENTION

The present application relates to the technology of cutting hard and brittle materials, and in particular to a cutting apparatus.

### BACKGROUND OF THE INVENTION

The cutting apparatus used in the market for cutting hard and brittle material rods usually includes a cutting device, a feeding device, and a winding device. The winding device is used to release or store a cutting wire, which is wound around the cutting device to cut the hard and brittle material rods. The feeding device is used to carry the hard and brittle material rods and drive them to move relative to the cutting device for cutting.

The hard and brittle materials include sapphire, monocrystalline silicon, polycrystalline silicon, magnetic materials, etc. Currently, there are many types of apparatuses for cutting silicon materials, but due to the different hardness, size, and heat resistance of different materials, corresponding cutting apparatuses need to be used to meet the cutting requirements, resulting in low universality of existing apparatuses. Moreover, most of the current small cutting apparatuses perform single-station cutting, while multi-station cutting apparatuses use exactly the same two sets of cutting devices, making them bulky and the volume and weight multiplied, which brings great difficulties to production, transportation and maintenance.

### SUMMARY OF THE INVENTION

An embodiment of the present application provides a cutting apparatus, which includes a cutting area assembly and a winding area assembly;
the cutting area assembly includes a cutting area frame, an upper part of which is provided with a cutting device, and a lower part of which is provided with a feeding device used to support a member-to-be-cut and drive it to move upward so that the member-to-be-cut is cut by the cutting device;
the cutting device includes an upper cutting roller group and a lower cutting roller group arranged in an up-and-down direction; the lower cutting roller group includes at least two main cutting rollers, which are arranged in parallel and spaced apart from each other, and a space is left between two adjacent main cutting rollers for the member-to-be-cut to pass through; the upper cutting roller group includes at least one main cutting roller, which is parallel to the main cutting rollers in the lower cutting roller group; and a cutting wire is wound around each of the main cutting rollers to form a cutting wire network; and
the winding area assembly is used to provide power for unwinding and winding the cutting wire, and guide the cutting wire from the winding area assembly to the main cutting rollers.

In the technical solution provided in the embodiment of the present application, a cutting area assembly and a winding area assembly are provided; the upper part of the cutting area frame of the cutting area assembly is provided with a cutting device, and the lower part of the cutting area frame is provided with a feeding device; the feeding device is used to support a member-to-be-cut and drive it to move upward so that the member-to-be-cut is cut by the cutting device; the cutting device includes an upper cutting roller group and a lower cutting roller group arranged in an up-and-down direction; the lower cutting roller group includes at least two main cutting rollers, which are arranged in parallel and spaced apart from each other; a space is left between two adjacent main cutting rollers for the member-to-be-cut to pass through, so that two members-to-be-cut can be cut simultaneously to achieve dual-station cutting, making the cutting efficiency increased by two times; the upper cutting roller group includes at least one main cutting roller, which is parallel to the main cutting rollers in the lower cutting roller group; the cutting wire is wound around each of the main cutting rollers to form a cutting wire network; and the winding area assembly is used to provide power for unwinding and winding the cutting wire, and guide the cutting wire from the winding area assembly to the main cutting rollers. By using the feeding device to drive the member-to-be-cut to move upward for cutting, high load-bearing stability and cutting stability are obtained, which is advantageous for improving cutting quality and therefore increasing yield rate.

### BRIEF DESCRIPTION OF THE DRAWINGS

FIG. 1 is a schematic structural view of the cutting apparatus provided in the embodiment of the present application;
FIG. 2 is a schematic structural view of the cutting area assembly provided in the embodiment of the present application;
FIG. 3 is a schematic structural view of the arrangement of the main cutting rollers provided in the embodiment of the present application;
FIG. 4 is a schematic structural view of the cooperation of the feeding device and the main cutting rollers provided in the embodiment of the present application;
FIG. 5 is a schematic structural view of the feeding device provided in the embodiment of the present application;
FIG. 6 is a schematic view of the feeding device provided in the embodiment of the present application from another angle;
FIG. 7 is a schematic structural view of the feeding device provided in the embodiment of the present application with a slide plate box and a carrying platform removed;
FIG. 8 is a schematic structural view of the carrying platform provided in the embodiment of the present application;
FIG. 9 is a schematic view of the carrying platform provided in the embodiment of the present application from another angle;
FIG. 10 is a sectional view of a loading table position in the carrying platform for the member-to-be-cut provided in the embodiment of the present application;
FIG. 11 is a top sectional view of a workstation in the carrying platform provided in the embodiment of the present application;
FIG. 12 is an enlarged view of a locking mechanism in the carrying platform provided in the embodiment of the present application;
FIG. 13 is a schematic structural view of the carrying platform provided in the embodiment of the present application with one loading table removed;
FIG. 14 is a schematic structural view of a reversing device provided in the embodiment of the present application for reversing a diamond wire at inlet and outlet ends of the cutting wire network;
FIG. 15 is a schematic structural view of the reversing device provided in the embodiment of the present application;
FIG. 16 is a partial schematic view of the reversing device shown in FIG. 15;
FIG. 17 is a partial schematic view of the reversing device shown in FIG. 15 from another angle;
FIG. 18 is a schematic view of an end face of a guide rod of the reversing device shown in FIG. 15;
FIG. 19 is a schematic structural view of the layout of wiring wheels in the winding area assembly in the cutting apparatus provided in the embodiment of the present application;
FIG. 20 is a schematic structural view of a wiring device in FIG. 19;
FIG. 21 is a schematic view of the wiring device in FIG. 20 from another angle;
FIG. 22 is a schematic structural view of a pedestal in the cutting apparatus provided in the embodiment of the present application;
FIG. 23 is a schematic structural view of another pedestal in the cutting apparatus provided in the embodiment of the present application;
FIG. 24 is a bottom view of the pedestal shown in FIG. 23;
FIG. 25 is a schematic structural view of a spray device provided in the embodiment of the present application;
FIG. 26 is a sectional view of the spray device shown in FIG. 25;
FIG. 27 is a schematic view of the spray device shown in FIG. 25 from another angle;
FIG. 28 is a schematic view of an upper spray box and a spray pipe in the spray device shown in FIG. 25 after fixation;
FIG. 29 is a schematic exploded view of some components of the cutting apparatus shown in FIG. 1;
FIG. 30 is a schematic view of the components shown in FIG. 29 from another angle;
FIG. 31 is a schematic view of the internal structure of a liquid supply tank shown in FIG. 30;
FIG. 32 is a partial schematic view of the cutting area frame shown in FIG. 2;
FIG. 33 is a schematic view of the cutting area frame shown in FIG. 2 from another angle;
FIG. 34 is a schematic view of the cutting area assembly shown in FIG. 2 from another angle;
FIG. 35 is a partial schematic view of the cutting device shown in FIG. 1;
FIG. 36 is a schematic structural view of the cutting area assembly provided in the embodiment of the present application;
FIG. 37 is an enlarged view of area C in FIG. 36;
FIG. 38 is a schematic structural view of a limiting mechanism in the cutting area assembly provided in the embodiment of the present application;
FIG. 39 is a schematic structural view of a drawing tool of a bearing box in the embodiment of the present application;
FIG. 40 is an enlarged view of area D in FIG. 39;
FIG. 41 is a schematic view of the usage state of the drawing tooling on the cutting apparatus in the embodiment of the present application;
FIG. 42 is a schematic structural view of the cutting area frame in the embodiment of the present application;
FIG. 43 is a schematic structural view of an auxiliary device for material charging in the embodiment of the present application;
FIG. 44 is a schematic structural view of a material blocking box in the embodiment of the present application;
FIG. 45 is a schematic view of the cutting apparatus in the embodiment of the present application from another angle;
FIG. 46 is a schematic view of a side structure of the spray device in the embodiment of the present application;
FIG. 47 is a schematic view of the cross-sectional structure of the spray device along line E-E in FIG. 46;
FIG. 48 is another schematic structural view of the cutting area assembly in the embodiment of the present application;
FIG. 49 is a schematic view of the cross-sectional structure of the cutting area assembly in the embodiment of the present application;
FIG. 50 is a schematic structural view of a working plate assembly provided in the embodiment of the present application;
FIG. 51 is an enlarged view of area F in FIG. 50;
FIG. 52 is a sectional view of the working plate assembly provided in the embodiment of the present application;
FIG. 53 is an enlarged view of area G in FIG. 52;
FIG. 54 is a schematic structural view of a workpiece platform provided in the embodiment of the present application;
FIG. 55 is a schematic structural view of a workpiece bottom plate provided in the embodiment of the present application;
FIG. 56 is a side view of the working plate assembly provided in the embodiment of the present application;
FIG. 57 is an enlarged view of area H in FIG. 56;
FIG. 58 is a partial sectional view of another feeding device provided in the embodiment of the present application;
FIG. 59 is an enlarged view of area I in FIG. 58;
FIG. 60 is a schematic structural view of another feeding device provided in the embodiment of the present application;
FIG. 61 is a schematic view of another feeding device provided in the embodiment of the present application from another angle;
FIG. 62 is a schematic view of the rear three-dimensional structure of a material blocking assembly in the embodiment of the present application;
FIG. 63 is a schematic structural view of an installation bracket in the embodiment of the present application;
FIG. 64 is a schematic structural view of another installation bracket in the embodiment of the present application; and
FIG. 65 is a schematic view of a partial structure along sectional line J-J in FIG. 36.

List of reference signs:
11: cutting area pedestal; 111: installation surface for cutting area frame; 112: installation surface for feeding device; 113: installation slot for feeding device; 114: installation boss; 115: positioning table; 116: support table for slide plate box; 12: winding area pedestal; 121: installation surface for winding area frame; 122: flow guide area for winding area pedestal; 123: reflux pump; 124: leveling foot; 125: transportation support block; 126: liquid collection tank; 127: liquid collection port; 128: liquid collection channel;
2: cutting area assembly; 21: cutting area frame; 211: drainage slope; 211-1: lower-end drainage port of drainage slope; 212: filter screen of cutting area frame; 213: drainage slot; 214: cover plate of drainage slot; 215: drainage port of drainage slot; 217: exhaust port of cutting area; 22: cutting device; 221: main cutting roller; 222: main roller motor; 223: bearing box; 231: cutting wire; 24: bearing box limiting mechanism; 241: bearing box connection block; 242: bearing box limiting rod; 243: bearing box limiting block; 244: anti-detachment protrusion; 245: limiting installation hole; 25: bearing box; 26: drawing tooling; 261: drawing frame; 2611: drawing crossbeam; 2612: drawing support rod; 262: drawing rod; 2621: screwing nut; 263: drawing plate; 2631: first fixing bayonet; 264: limiting support block; 2641: second fixing bayonet; 265: elastic ball head; 266: ball head screw rod; 27: auxiliary device for material charging; 271: installation bracket for material charging; 2711: fixing part for material charging; 2712: support part for material charging; 272: auxiliary rod for material charging; 28: material blocking box; 281: material blocking frame; 2811: first material blocking plate; 2812: second material blocking plate; 2813: installation plate for material blocking; 2814: support plate for material blocking; 282: fixing bracket for material blocking; 2821: fixing plate for material blocking; 2822: limiting plate for material blocking; 2823: connection plate for material blocking; 2824: installation hole for material blocking;
3: winding area assembly; 31: winding area frame; 311: exhaust port of winding area; 32: winding/unwinding device; 321: winding/unwinding motor; 322: winding/unwinding roller; 333: tension wheel; 34: wiring device; 341-1: wiring wheel; 341-2: first wiring rocker arm; 342-1: first counterweight block; 342-2: second wiring rocker arm; 342-3: second counterweight block; 343: correction conductive pillar; 344: wiring rotating shaft; 345: connection plate for wiring rotating shaft; 346: wiring guide module; 347: wiring slide seat; 348: driving motor for wiring slide seat; 35: tension device; 36: reversing device; 361: guide rod; 362: slide seat; 362-1: upper slider of slide seat; 362-11: upper slider notch of slide seat; 362-2: lower slider of slide seat; 362-21: lower slider notch of slide seat; 362-3: locking screw of slide seat; 363: steering connection plate; 364: reversing wheel assembly; 364-1: reversing wheel; 364-2: reversing wheel seat; 364-3: installation pin shaft for reversing wheel seat; 364-4: lower arc-shaped hole; 364-5: lower adjustment screw; 364-6: upper adjustment screw; 365: fixing seat for guide rod;
4: feeding device; 41: feeding base; 42: slide plate box; 421: guide slider; 422: guide rail; 423: feeding motor; 424: reducer; 425: lead screw; 426: lifting pallet; 4271: feeding pedestal assembly; 4272: feeding pedestal; 4273: first positioning platform for feeding; 4274: positioning surface for feeding; 4275: installation column for feeding; 4276: positioning boss for feeding; 4277: positioning block for feeding; 4278: upper frame for feeding; 4279: material inlet hole for feeding; 4280: fixing block for feeding; 4281: slide plate box for feeding; 4282: first limiting structure for feeding; 4283: second limiting structure for feeding; 4284: feeding slider; 4285: feeding lead screw;
43: carrying platform; 431: carrying bottom plate; 432: loading table; 4321: slope; 433: limiting strip; 4331: guide slope; 434: fixing strip; 441: locking block; 442: locking bolt; 443: locking screw; 444: locking spring; 445: locking nut; 451: pressing block; 452: limiting plate; 461: adjustment plate; 462: first adjustment screw; 462: adjustment block; 464: second adjustment screw; 47: limiting block; 481: workpiece platform; 482: workpiece bottom plate; 483: workpiece adjustment bolt; 484: workpiece slide slot; 485: workpiece fixing block; 486: via hole mating section of workpiece; 487: thread section of workpiece; 488: workpiece locking member; 489: workpiece installation structure; 491: workpiece adjustment block; 492: workpiece adjustment handle; 493: workpiece limiting structure; 494: first mating slope of workpiece; 495: second mating slope of workpiece; 496: workpiece limiting block; 497: workpiece drainage slot;
51: liquid supply tank; 511: drainage area; 512: flow area; 513: liquid supply area; 514-1: long partition; 514-11: long overflow hole; 514-2: short partition; 514-21: short overflow hole; 52: spray device; 521: upper spray box; 521-1: spray hole of upper spray box; 521-2: hanging plate; 521-3: frame type top; 522: spray pipe; 522-1: spray hole of spray pipe; 523: lower spray box; 523-1: spray hole of lower spray box; 524: cover plate; 525: spray adapter pipe; 526: spray body; 5261: spray support bracket; 5262: spray protection plate; 527: drop box; 5271: spray baffle; 5272: drop tray; 528: spray locking mechanism; 5281: spray locking wrench; 5282: spray limiting block; 531: oil mist collection device; 534: liquid return pipe; 535: liquid supply pipe; 541: heat exchanger; 542: coolant machine for liquid supply tank; 543: coolant machine for bearing box;
91: member-to-be-cut.

### DETAILED DESCRIPTION OF THE EMBODIMENT(S) OF THE INVENTION

This embodiment provides a cutting apparatus for cutting hard and brittle material rods into sheet-like structures. The hard and brittle materials may be sapphire, monocrystalline silicon, polycrystalline silicon, magnetic materials, etc. The solution provided in this embodiment is particularly suitable for cutting magnetic materials such as neodymium iron boron and samarium cobalt.

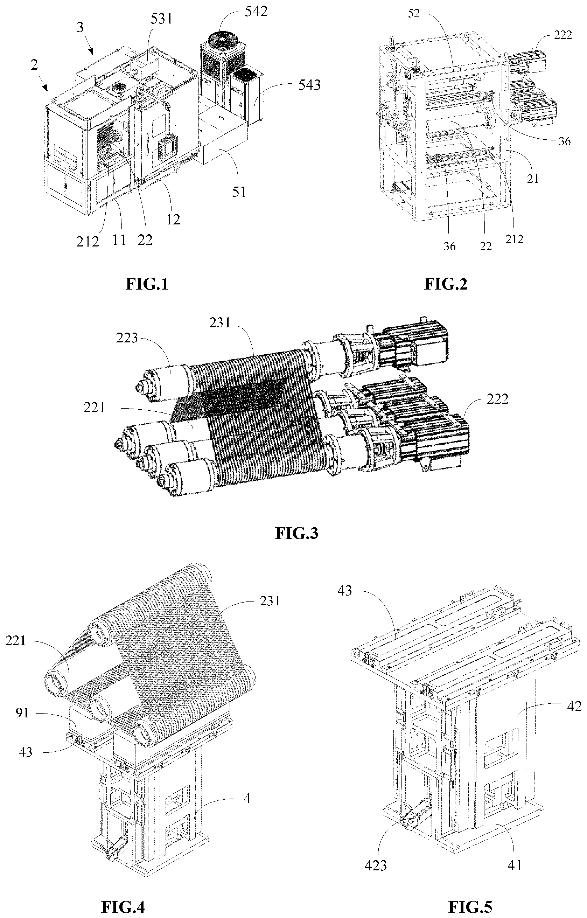

As shown in FIGS. 1 to 3, the cutting apparatus provided in this embodiment includes a cutting area assembly 2 and a winding area assembly 3.

The cutting area assembly 2 and the winding area assembly 3 are arranged side by side. In this embodiment, the direction toward the cutting area assembly 2 is set forward, and the direction toward the winding area assembly 3 is set rearward, so the cutting area assembly 2 is located in front of the winding area assembly 3.

The cutting area assembly 2 includes a cutting area frame 21, which serves as a basic frame for installing a cutting device 22 and a feeding device 4. An upper part of the cutting area frame 21 forms a cutting chamber, and the cutting device 22 is arranged at the upper part of the cutting area frame 21, that is, it is located inside the cutting chamber. The feeding device is arranged at a lower part of the cutting area frame 21. The feeding device 4 is used to support a member-to-be-cut and drive it to move upward so that the member-to-be-cut is cut by the cutting device 4. For example, the member-to-be-cut here is magnet material, the cross section of which can be rectangular, circular, circular ring, hexagonal, etc. In this embodiment, the magnet material is specifically a magnetic material rod with a rectangular cross section.

The cutting device 22 includes an upper cutting roller group and a lower cutting roller group arranged in an up-and-down direction. The lower cutting roller group includes at least two main cutting rollers 221, which are arranged in parallel and spaced apart from each other. A space is left between two adjacent main cutting rollers 221 for the member-to-be-cut to pass through.

The two main cutting rollers 221 in the lower cutting roller group can be at the same height or at different heights.

The upper cutting roller group includes at least one main cutting roller, which is parallel to the main cutting rollers 221 in the lower cutting roller group. A cutting wire 231 is wound around each of the main cutting rollers 221 to form a cutting wire network, synchronously cutting the member-to-be-cut into multiple magnetic material sheets.

The winding area assembly includes a winding area frame and multiple winding wheels arranged on the winding area frame. The cutting wire is wound around each of the winding wheels and extends to the main cutting rollers 221. The winding area assembly is used to provide power for unwinding and winding the cutting wire, and guide the cutting wire from the winding area assembly to the main cutting rollers 221, so that the cutting wire is in a high-speed motion state, equivalent to cutting the member-to-be-cut by a wire saw.

In the technical solution provided in this embodiment, a cutting area assembly and a winding area assembly are provided; the upper part of the cutting area frame of the cutting area assembly is provided with a cutting device, and the lower part of the cutting area frame is provided with a feeding device; the feeding device is used to support a member-to-be-cut and drive it to move upward so that the member-to-be-cut is cut by the cutting device; the cutting device includes an upper cutting roller group and a lower cutting roller group arranged in an up-and-down direction; the lower cutting roller group includes at least two main cutting rollers, which are arranged in parallel and spaced apart from each other; a space is left between two adjacent main cutting rollers for the member-to-be-cut to pass through, so that two members-to-be-cut can be cut simultaneously to achieve dual-station cutting, making the cutting efficiency increased by two times; the upper cutting roller group includes at least one main cutting roller, which is parallel to the main cutting rollers in the lower cutting roller group; the cutting wire is wound around each of the main cutting rollers to form a cutting wire network; and the winding area assembly is used to provide power for unwinding and winding the cutting wire, and guide the cutting wire from the winding area assembly to the main cutting rollers. By using the feeding device to drive the member-to-be-cut to move upward for cutting, high load-bearing stability and cutting stability are obtained, which is advantageous for improving cutting quality and therefore increasing yield rate.

Further, the cutting area assembly 2 and the winding area assembly 3 are arranged side by side on a pedestal 11, which serves as a bottom support and installation structure.

On the basis of the above technical solution, this embodiment provides a specific implementation of the cutting device: the lower cutting roller group includes three main cutting rollers 221, which are arranged side by side in parallel and spaced apart from each other; one member-to-be-cut can pass between two adjacent main cutting rollers 221, so that the three main cutting rollers 221 can cut two members-to-be-cut simultaneously, achieving dual-station cutting and making the cutting efficiency increased by two times. Moreover, the cutting apparatus has a small volume and light weight, thus reducing the difficulty in production and assembly and also facilitating transportation.

The three main cutting rollers 221 in the lower cutting roller group can be at the same height, or the main cutting roller 221 located in the middle can be slightly lower than the main cutting rollers 221 on both sides.

The upper cutting roller group includes one main cutting roller 221, which is parallel to the three main cutting rollers 221 in the lower cutting roller group. The cutting device includes four main cutting rollers arranged in a triangle.

The cutting area frame 21 has front and rear side walls, which are respectively provided with bearing box accommodation holes. Front and rear ends of each of the main cutting rollers 221 are inserted into the bearing box accommodation holes correspondingly and supported in the bearing box accommodation holes through bearing boxes 223. The rear ends of the main cutting rollers 221 are connected to a main roller motor 222, which is used to drive the main cutting rollers 221 to rotate.

The feeding device 4 is located below the cutting device 22, and the member-to-be-cut is placed at the top of the feeding device 4. The feeding device 4 is used to drive the member-to-be-cut to move upward and enter between two adjacent main cutting rollers 221 so that the member-to-be-cut is cut by the cutting wire. As shown in FIGS. 4 to 7, the feeding device 4 provided in this embodiment includes a feeding base 41, a feeding movement assembly, a carrying platform 43, and a feeding drive mechanism.

The feeding base 41 serves as a basic structure, which is fixed to the ground or to the pedestal of the cutting apparatus; for example, it is fixed to the cutting area pedestal 11. The feeding movement assembly is slidably arranged on the outer side of the feeding base 41, and can move vertically relative to the feeding base 41; that is, the feeding movement assembly moves, such as rising or falling, or moving horizontally, or moving diagonally upward or downward. The feeding drive mechanism is used to provide a movement driving force to the feeding movement assembly. The carrying platform 43 is arranged at one end of the feeding movement assembly that faces the member-to-be-cut, and is used to carry the member-to-be-cut 91.

In this embodiment, the description will be given using an example in which the carrying platform 43 is arranged at the top of the feeding movement assembly, and the feeding movement assembly moves vertically, driving the carrying platform 43 and the member-to-be-cut 91 to move vertically upward for cutting.

The hard and brittle material rod, as a kind of the member-to-be-cut, is placed on the carrying platform 43. At least two main cutting rollers 221 are arranged in parallel at the top of the slicer, and the cutting wire 231 is wound around the main cutting rollers to form a cutting wire network. The feeding device drives the member-to-be-cut 91 to rise and pass between the two main cutting rollers 221, so that the cutting wire cuts the member-to-be-cut 91 into sheet-like structures.

In the above solution, the feeding movement assembly is arranged on the outer side of the feeding base, and the feeding drive mechanism drives the feeding movement assembly to slide relative to the feeding base, thereby driving the carrying platform to move. The member-to-be-cut is brought between adjacent main cutting rollers, and the member-to-be-cut is cut by the cutting wire wound around the main cutting rollers. Since the feeding movement assembly is arranged on the outer side of the feeding base, a projection area of the feeding movement assembly on the support platform is larger, so that the movement assembly can be supported more stably, avoiding the problem of the member-to-be-cut tilting or the support platform shaking caused by uneven force on the support platform, ensuring that the member-to-be-cut is stably maintained in the target position, improving the cutting accuracy, and further improving the yield rate.

Depending on the difference in the number and layout of the main cutting rollers, the number of the members-to-be-cut that are cut simultaneously also varies. As shown in FIG. 3, four main cutting rollers 231 are arranged in a triangular shape, with one main cutting roller 231 arranged at the top, and three main cutting rollers 231 arranged at the bottom side by side in the horizontal direction. The cutting wire between two adjacent main cutting rollers 231 can cut one member-to-be-cut, and two members-to-be-cut can be cut simultaneously in this solution, achieving dual-station cutting. Alternatively, two main cutting rollers can be arranged at the bottom to achieve single-station cutting; or four main cutting rollers can be arranged at the bottom to achieve three-station cutting.

On the basis of the above technical solution, a specific implementation of the feeding device is provided. As shown in FIG. 5, the feeding movement assembly includes two sets of slide plate boxes 42 symmetrically arranged on the outer side of the feeding base 41. The slide plate boxes 42 are slidably connected to the feeding base 41 through a guide mechanism, and can be raised and lowered relative to the feeding base 41. The carrying platform 43 is arranged at top ends of the two sets of slide plate boxes 42.

In an embodiment, the guide mechanism includes a guide slider 421 and a guide rail 422, which can move relative to each other. In an implementation, the guide slider 421 is fixed to an outer side surface of the feeding base 41, and the guide slider 421 has a guide slot extending vertically. The guide rail 422 is fixed to an inner side surface of the slide plate box 42 that faces the feeding base 41. The guide rail 422 extends vertically and is slidably embedded in the guide slot. Through sliding cooperation between the guide slider 421 and the guide rail 422, the slide plate box 42 and the feeding base 41 can slide vertically relative to each other.

The feeding base 41 is a frame structure with an internal accommodation space, and the feeding drive mechanism is arranged in the accommodation space. The feeding drive mechanism includes a feeding motor 423, a reducer 424, a lead screw 425, and a lifting pallet 426. The feeding motor 423 is fixed to the feeding base 41 and located in the accommodation space. The reducer 424 is also located in the accommodation space and connected to an output end of the feeding motor 423. The lead screw 425 extends vertically, and a bottom end thereof is connected to an output end of the reducer 424. The lifting pallet 426 is threaded with the lead screw 524, and the lifting pallet 426 is connected to the two sets of slide plate boxes 42 respectively.

The lead screw 425 is driven to rotate by the feeding motor 423 and the reducer 424, and the lead screw 425 drives the lifting pallet 426 and the slide plate boxes 42 to move up and down.

In the above solution, the slide plate boxes 42 are symmetrically distributed on both sides of the feeding base 41, and the lead screw 425 and the lifting pallet 426 are located in the middle position of the feeding base 41, so that the two slide plate boxes 42 can be raised synchronously with uniform force exerted on them, ensuring that the height of the carrying platform 43 above them is consistent on both sides, thereby improving the cutting consistency of the two workstations of the cutting apparatus and facilitating the improvement of cutting quality. In addition, the use of the lead screw 425 for feeding has higher accuracy, which is also advantageous for achieving a uniform-speed upward movement of the carrying platform 43, so that the cutting surface of the member-to-be-cut 91 meets the requirements.

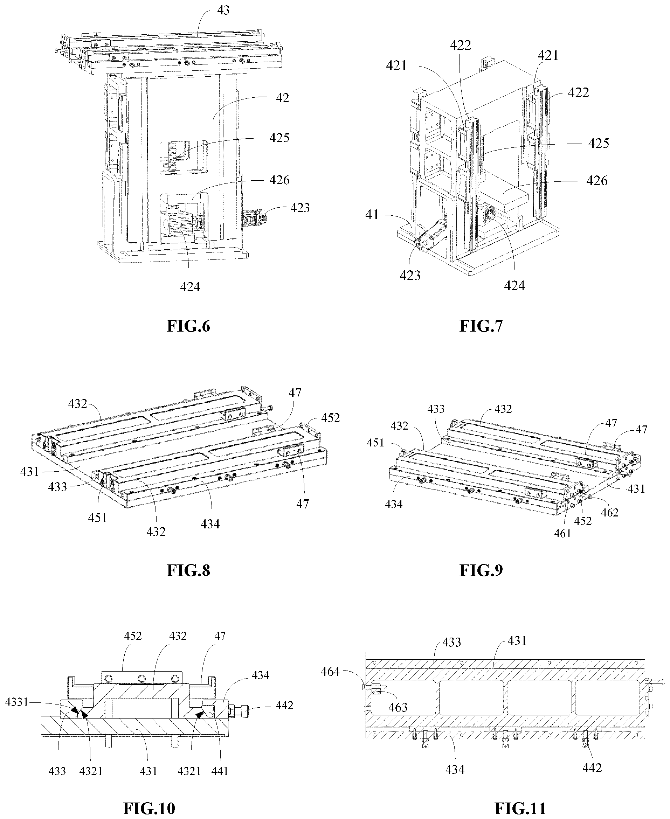

On the basis of the above technical solution, this embodiment also provides a specific implementation of the carrying platform. As shown in FIGS. 8 and 9, the carrying platform provided in this embodiment includes a carrying bottom plate 431, a loading table 432, a first limiting assembly, and a displacement adjustment assembly.

The carrying bottom plate 431 is a plate-shaped structure that extends in the horizontal direction. The loading table 432 is arranged on the carrying bottom plate 431; specifically, it can be arranged on a top surface of the carrying bottom plate 431, and can move in a first direction relative to the carrying bottom plate 431. In an embodiment, the carrying bottom plate 431 is a rectangular plate, with its length direction being the first direction and its width direction being a second direction.

The member-to-be-cut 91 is placed on the loading table 432 and can move together with the loading table 432. When the cutting wire in the slicer breaks, the loading table 432 moves in the first direction to move the uncut part of the member-to-be-cut 91 below the cutting wire network, and remove the cut part out of the coverage area of the cutting wire network. The slicer is restarted to cut the member-to-be-cut 91 through the cutting wire network.

The first limiting assembly is arranged on the loading table 432, and is located at both ends of the loading table 432 in the second direction, so that the loading table 432 is restricted from moving in the second direction, and can only move in the first direction.

The displacement adjustment assembly is arranged at the end of the carrying bottom plate 431 in the first direction, and is used to adjust the displacement of the loading table 432 in the first direction, that is, the displacement adjustment assembly is used to drive the loading table 432 to move in the first direction.

In the above technical solution, a loading table for carrying the member-to-be-cut, a first limiting assembly, and a displacement adjustment assembly are arranged on the carrying bottom plate; the displacement adjustment assembly is arranged at the end of the carrying bottom plate in the first direction, and is used to drive the loading table and the member-to-be-cut to move together relative to the carrying bottom plate in the first direction; the first limiting assembly is located at both ends of the loading table in the second direction, and is used to restrict the loading table from moving in the second direction, so that the loading table can only move in the first direction, achieving the adjustment of the position of the member-to-be-cut; when the cutting wire in the cutting apparatus breaks, the uncut part is moved to the initial cutting position, and the cutting apparatus is restarted to cut the member-to-be-cut. The above solution can improve the utilization rate of the member-to-be-cut, reduce raw material waste, and lower production costs.

In an implementation, there is one loading table 432, on which one member-to-be-cut 91 is placed, so as to achieve single-station cutting. Alternatively, there are two loading tables 432, which are arranged side by side on the top surface of the carrying bottom plate 431, so as to achieve dual-station cutting. Alternatively, the number of loading tables 432 can be three or more to achieve multi-station cutting. Each of the loading tables 432 is provided with the displacement adjustment assembly at the end in the first direction, and provided with the first limiting assembly at the ends in the second direction.

In this embodiment, the description will be given using an example in which two loading tables 432 are provided, and the two loading tables 432 and the first limiting assemblies are symmetrically arranged.

On the basis of the above technical solution, this embodiment provides an implementation of the first limiting assembly. As shown in FIGS. 7 to 10, the first limiting assembly includes a limiting strip 433 and a fixing strip 434. The limiting strip 433 extends in the first direction and is arranged on one side of the loading table 432. The fixing strip 434 extends in the first direction and is arranged on the other side of the loading table 432. The fixing strip 434 and the limiting strip 433 define a space for accommodating the loading table 432, and restrict the loading table 432 from moving in the second direction, so that the loading table 432 can only move in the first direction within this space.

Further, the loading table 432 has a loading table body with a rectangular cross section, and the bottom of the loading table body extends outward in the second direction to form an extension part. The loading table body and the extension part form a stepped structure. End faces of the extension part that face the fixing strip 434 and the limiting strip 433 are slopes 4321.

The fixing strip 434 has a fixing support part extending in a direction perpendicular to the carrying bottom plate 431. The top of the fixing support part extends toward the loading table 432 in the second direction to form a limiting part, which is used to abut against the extension part of the loading table 432 and apply a stopping force to the loading table 432 in the second direction.

The limiting strip 433 has a limiting support part extending in the direction perpendicular to the carrying bottom plate 431. The top of the limiting support part extends toward the loading table 432 in the second direction to form a guide part. A guide slope 4331 transitions between the guide part and the limiting support part, and the guide slope 4331 is used to abut against the slope 4321 of the extension part of the loading table. The guide slope 4331 contacts the slope 4321 of the extension part, providing guidance for the movement of the loading table 432 in the first direction.

Further, the first limiting assembly also includes a locking mechanism arranged on the fixing strip 434, and the locking mechanism is used to apply a force to the loading table 432 in the second direction to press the loading table 432 tightly against the limiting strip 433.

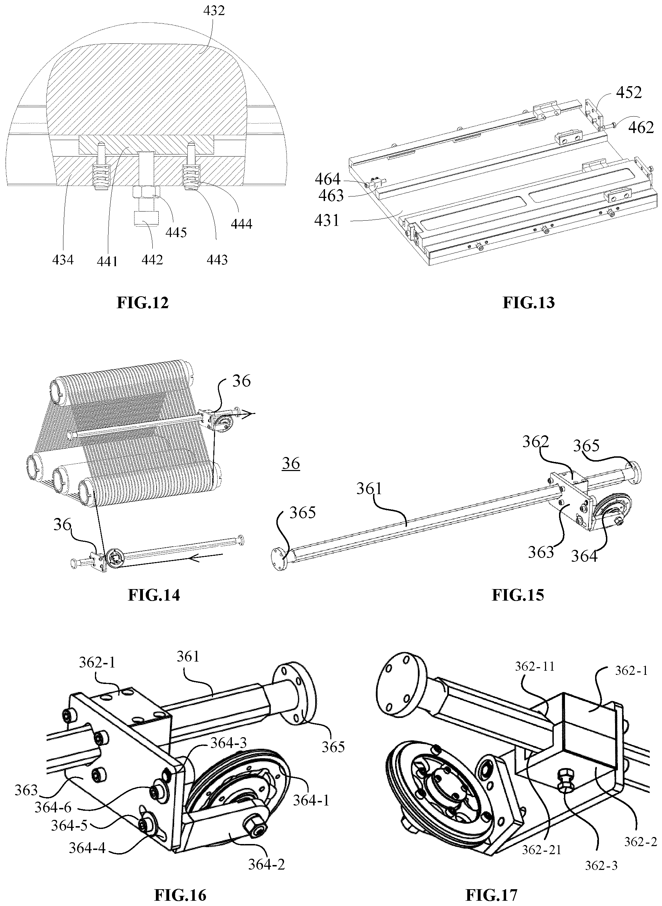

As shown in FIGS. 11 and 12, in an embodiment, the locking mechanism includes a locking block 441, a locking bolt 442, a locking screw 443, and a locking spring 444. The locking block 441 is located between the fixing strip 434 and the loading table 432. The locking bolt 442 is screwed into a threaded hole of the fixing strip 434 in the second direction, and a tail end of the locking bolt 442 is pressed against the locking block 441. A locking nut 445 is sleeved on the locking bolt 442, and the locking nut 445 is located between the head of the locking bolt 442 and the fixing strip 434.

Before the cutting apparatus is started, when the locking bolt 442 is rotated clockwise, it moves toward the locking block 441 to apply a thrust to the locking block 441 and press it tightly against the loading table 432, restricting the loading table 432 from moving in the first or second direction.

When it is necessary to adjust the position of the member-to-be-cut, the locking bolt 442 is rotated counterclockwise to move it away from the locking block 441, so that the locking bolt 442 no longer applies a pressing force to the locking block 441, and thus no longer applies pressure to the loading table 432 in the second direction. The loading table 432 can move in the first direction.

Further, the locking screw 443 is threaded along the second direction into a stepped hole of the fixing strip 434, and a tail end of the locking screw 443 is screwed into a threaded hole of the locking block 441. The locking spring 444 is sleeved onto the locking screw 443, and the locking spring 443 is limited within the stepped hole by the head of the locking screw 444.

When the locking block 441 moves toward the loading table 432, the locking screw 444 moves together with the locking block 441, and the locking spring 443 is compressed to accumulate elastic potential energy. When the locking bolt 442 no longer applies a pressing force to the locking block 441, the locking spring 443, under the action of its rebound force, drives the locking block 441 and the locking screw 443 to move together in a direction away from the loading table 432 so that they are located away from the loading table 432. Then, the loading table 432 can move smoothly in the first direction.

After the loading table 432 is moved in place in the first direction, the locking bolt 442 is rotated clockwise again to push the locking block 441 to move and press the loading table 432 tightly for fixation, avoiding the movement of the loading table 432 in the first or second direction during the cutting process, which would otherwise affect the cutting accuracy.

This embodiment also provides an implementation of the displacement adjustment assembly; as shown in FIG. 9, the displacement adjustment assembly includes an adjustment plate 461 and a first adjustment screw 462. The adjustment plate 461 is arranged on an end face of the carrying bottom plate 431 in the first direction; for example, it can be fixed to the end face of the carrying bottom plate 431 by screws. A top end of the adjustment plate 461 is higher than the carrying bottom plate 431 and stops at the end of the loading table 432, and is used to restrict the movement of the carrying platform 431 toward the adjustment plate 461.

The first adjustment screw 462 is screwed into a threaded hole of the adjustment plate 461 in the first direction, and rotation of the first adjustment screw 462 can change the length of extension of the first adjustment screw 462 relative to the adjustment plate 461. A tail of the first adjustment screw 462 is used to abut against the loading table 432. When the first adjustment screw 462 is rotated clockwise, it pushes the loading table 432 to move in a direction away from the first adjustment screw 462.

As shown in FIGS. 8, 9, 11 and 13, the displacement adjustment assembly further includes an adjustment block 463 and a second adjustment screw 464. The adjustment block 463 is arranged on the top surface of the carrying bottom plate 431 and is located at the end of the carrying bottom plate 431 that is away from the adjustment plate 461; for example, it can be fixed to the carrying bottom plate 431 by screws that extend vertically.

The second adjustment screw 464 is screwed into a threaded hole of the adjustment block 463 in the first direction, and rotation of the second adjustment screw 464 can change the length of extension of the second adjustment screw 464 relative to the adjustment block 463. A tail of the second adjustment screw 464 is used to abut against the loading table 432. When the second adjustment screw 464 is rotated clockwise, it pushes the loading table 432 to move in a direction away from the second adjustment screw 464, opposite to the direction in which the loading table 432 moves under the clockwise rotation of the first adjustment screw 462.

By rotating the first adjustment screw 462 and the second adjustment screw 464, the loading table 432 can be adjusted to move in the first direction, achieving bidirectional movement and higher flexibility. Moreover, through screw adjustment, high adjustment accuracy is achieved, allowing the loading table 432 to move to the target position to adapt to the positions of different cutting edges of the members-to-be-cut.

In an embodiment, a bottom surface of the loading table 432 is recessed upward to form a lower groove for accommodating the adjustment block 463, and the tail of the second adjustment screw 464 acts on a side wall of the lower groove to apply a thrust to the loading table 432 in the first direction.

On the basis of the above technical solution, a second limiting assembly is further adopted, which is arranged at both ends of the loading table 432 in the first direction respectively, so as to restrict the member-to-be-cut 91 from moving relative to the loading table 432 in the first direction.

In an implementation, as shown in FIGS. 8 and 9, the second limiting assembly includes a pressing block 451 and a limiting plate 452. The pressing block 451 is arranged on an end face of the loading table 432 that is away from the displacement adjustment assembly in the first direction, and the top of the pressing block 451 is higher than the loading table 432 and is used to abut against the end face of the member-to-be-cut 91. For example, the pressing block 451 extends vertically, with its bottom end fixed to the end face of the loading table 432 by screws, and its top end higher than the loading table 432 and pressed against the end face of the member-to-be-cut 91 to restrict the member-to-be-cut 91 from moving in a direction toward the pressing block 451.

The limiting plate 452 is arranged on the end face of the loading table 432 that is close to the displacement adjustment assembly in the first direction. The top of the limiting plate 452 is higher than the loading table 432 and is used to abut against the end face of the member-to-be-cut 91. For example, the limiting plate 452 is perpendicular to the first direction, with its bottom end fixed to the loading table 432 by screws, and its top higher than the loading table 432 and pressed against the end face of the member-to-be-cut 91 for restricting the member-to-be-cut 91 from moving in a direction toward the limiting plate 452.

The above-mentioned pressing block 451 and limiting plate 452 restrict the member-to-be-cut 91 from moving in the first direction at both ends of the member-to-be-cut 91 respectively, preventing the member-to-be-cut 91 from moving during the cutting process and affecting the cutting accuracy, thus ensuring the yield rate.

Further, a third limiting assembly is also used, which is arranged on both sides of the loading table 432 in the second direction respectively. The top of the third limiting assembly is higher than the loading table 432, and is used to restrict the member-to-be-cut 91 from moving in the second direction. In a specific implementation, as shown in FIG. 3, the third limiting assembly includes two limiting blocks 47 symmetrically arranged on both sides of the loading table 432 in the second direction. The limiting block 47 has a bottom support extending in the second direction, and an end of the bottom support is fixed to a side face of the loading table 432. An end of the bottom support that is away from the loading table 432 extends upward to form a limit stop, and the top end of the limit stop is higher than the loading table 432 and used to abut against a side face of the member-to-be-cut 92. The bottom support and the limit stop form an L-shaped structure.

The width of the member-to-be-cut 91 can be smaller than or equal to the width of the loading table 432, or larger than the width of the loading table 432. When the width of the member-to-be-cut 91 is larger than the width of the loading table 432, the two sides of the member-to-be-cut 91 rest on the limiting blocks 47, which are used to support the member-to-be-cut 91 and can also restrict the member-to-be-cut 91 from moving in the second direction.

The above-mentioned winding area assembly includes a winding area frame 31, and two winding groups arranged on the winding area frame 31 in the up-and-down direction. The cutting wire moves back and forth between the two winding groups; that is, during a certain cutting time period, the upper winding group is used for unwinding, and the lower winding group is used for winding; during another cutting time period, the upper winding group is used for winding, and the lower winding group is used for unwinding. The winding group each includes a winding/unwinding device 32, a wiring device 34, and a tension device 35.

The winding/unwinding device 32 is used to store the cutting wire, and the winding/unwinding device 32 includes a winding/unwinding motor 321 and a winding/unwinding roller 322. The winding/unwinding motor 321 drives the cutting wire to rotate forward or backward, and the cutting wire is wound around the winding/unwinding roller 322.

The wiring device 34 is arranged above the winding/unwinding device 32. The wiring device 34 is used to guide the cutting wire to be wound around or unwound from the winding/unwinding device 32 in sequence in an axial direction of the winding/unwinding device 32.

The tension device 35 is arranged above the wiring device 34 to adjust the tension of the cutting wire, and the cutting wire extends from the tension device 35 to the cutting area assembly 2.

In addition, as shown in FIG. 2, a reversing device 36 is also provided in the cutting area assembly 2. Specifically, two reversing devices 36 are arranged on the outer side of the cutting device 22 in the up-and-down direction. The height of one of the reversing devices 36 is set between the upper cutting roller group and the lower cutting roller group, and the other of the reversing devices 36 is lower than the lower cutting roller group. The cutting wire extends from the winding area assembly to one reversing device 36, is wound around each of the main cutting rollers 221 to form a wire network, and then passes through the other reversing device 36 before being recycled to the winding area assembly. The reversing devices 36 are fixed on the cutting area frame 21.

From one of the winding/unwinding devices 32, the cutting wire passes through the wiring device 34, the tension device 35 and the reversing device 36 in sequence, and then is wound around the main cutting rollers 221 from one ends of the main cutting rollers 221 to form a cutting wire network; next, it comes out of the other ends of the main cutting rollers 221, and passes through the other group of reversing device 36, tension device 35 and wiring device 34 in sequence before being stored in the other winding/unwinding device 32.

On the basis of the above technical solution, this embodiment also provides a specific implementation of the reversing device 36. As shown in FIGS. 14 to 18, the reversing device 36 includes a guide rod 361, a slide seat 362, a steering connection plate 363, and a reversing wheel assembly 364. The slide seat 362 is connected to the guide rod 361, and the slide seat 362 can slide in the length direction of the guide rod 361 and can be locked after sliding in place. The steering connection plate 363 is fixed to the slide seat 361. The reversing wheel assembly 364 is connected to the steering connection plate 363, and it can swing toward and away from the guide rod and can be locked after swinging in place.

In the above-mentioned reversing device, the slide seat and the steering connection plate are fixed together, and the reversing wheel assembly is connected to the steering connection plate. In this way, when the slide seat slides in the length direction of the guide rod, it will drive the steering connection plate and the reversing wheel assembly to move. After the slide seat slides into place, it is locked; at this point, the position of the slide seat and the steering connection plate relative to the guide rod is locked. The reversing wheel assembly can swing toward and away from the guide rod. After a reversing wheel has swung into place, the reversing wheel assembly is locked; at this point, the distance between the reversing wheel assembly and the guide rod is fixed. In the reversing device of the cutting wire network provided in this embodiment of the application, on one hand, the position of the reversing wheel assembly in the length direction of the guide rod can be adjusted, and on the other hand, the direction of the reversing wheel assembly being toward or away from the guide rod can also be adjusted, achieving the adjustment of the reversing wheel assembly in multiple directions, and thus realizing flexible adjustment of the direction in which the diamond wire passes through the reversing wheel assembly.

In an embodiment, the slide seat 362 includes an upper slider 362-1 of the slide seat, a lower slider 362-2 of the slide seat, and a locking screw 362-3 of the slide seat. The upper slider 362-1 of the slide seat has an upper slider notch 362-11 of the slide seat, which is opened downward. The upper slider 362-1 of the slide seat sits on the guide rod 361 through the upper slider notch 362-11 of the slide seat. The lower slider 362-2 of the slide seat has a lower slider notch 362-21 of the slide seat, which is opened upward. The lower slider 362-2 of the slide seat is connected below the upper slider 362-1 of the slide seat with the lower slider notch 362-21 of the slide seat facing upward, and there is a gap between a bottom wall of the lower slider notch 362-21 of the slide seat and the guide rod 361.

The locking screw 362-3 of the slide seat passes through the lower slider notch 362-21 of the slide seat from the bottom of the lower slider 362-2 of the slide seat, and enters the gap between the bottom wall of the lower slider notch 362-21 of the slide seat and the guide rod 361 to lock the slide seat 362.

When it is required to slide the slide seat 362 in the length direction of the guide rod 361, the locking screw 362-3 of the slide seat is unscrewed, and a gap is left between the top of the locking screw 362-3 of the slide seat and the guide rod 361. After sliding the slide seat 363 into place, the locking screw 362-3 of the slide seat is tightened. The locking screw 362-3 of the slide seat is pressed against the bottom of the guide rod 361, thereby locking the slide seat 362 in the length direction of the guide rod 361. The way of fixing the position of the slide seat 362 using the locking screw 362-3 of the slide seat, which is located below the lower slider 362-2 of the slide seat, is convenient and reliable, and facilitates operation.

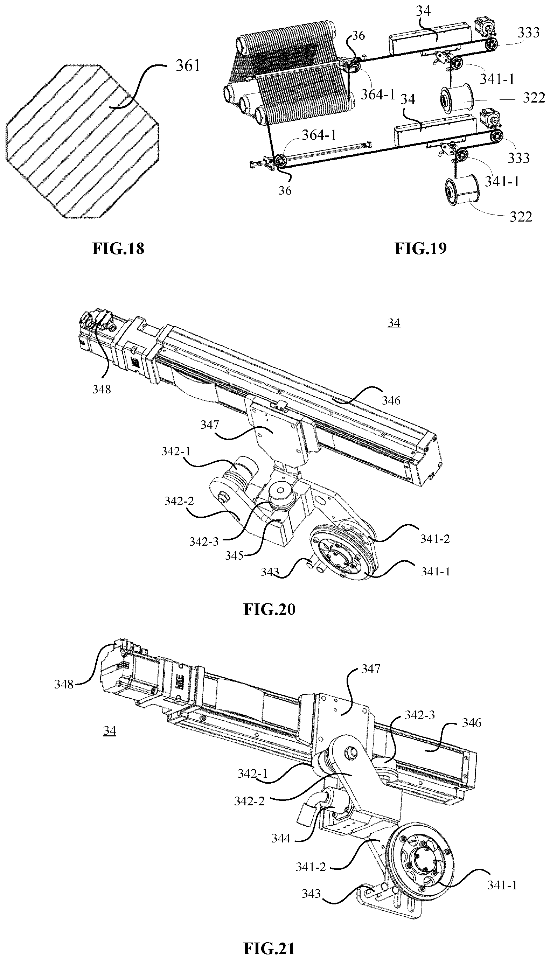

In an embodiment, as shown in FIG. 18, the guide rod 361 has a flat-cornered diamond shape with end faces being chamfered flat corners. Four flat corners of the flat-cornered diamond shape face upward, downward, leftward and rightward respectively. The upper slider notch 362-11 of the slide seat is an inverted V-shaped notch, and the upper slider 362-1 of the slide seat sits on the upward-facing flat corner of the flat-cornered diamond shape through the V-shaped notch. The lower slider notch 362-21 of the slide seat is a concave notch, and inner notch walls of the concave notch are clamped at the two leftward-facing and rightward-facing flat corners of the flat-cornered diamond shape.

The upper slider 362-1 of the slide seat sits on the upward-facing flat corner of the flat-cornered diamond shape through the inverted V-shaped notch under the action of gravity. The inner notch walls of the concave notch are clamped at the two leftward-facing and rightward-facing flat corners of the flat-cornered diamond shape, which can facilitate the connection between the upper slider of the slide seat and the top of the notch walls of the concave notch through bolts and screw holes. The top of the locking screw of the slide seat can abut against the downward-facing flat corner of the flat-cornered diamond shape, so that the locking screw of the slide seat can stably abut against the guide rod to achieve the locking of the slide seat.

In an embodiment, the reversing wheel assembly 364 includes a reversing wheel 364-1 and a reversing wheel seat 364-2, and the reversing wheel 364-1 is installed on the reversing wheel seat 364-2. The steering connection plate 363 has an installation hole for the reversing wheel seat. The reversing wheel seat is rotatably installed at the steering connection plate 363 through an installation pin shaft 364-3 for the reversing wheel seat and the installation hole for the reversing wheel seat.

The reversing wheel is installed on the reversing wheel seat, so that the reversing wheel can rotate. Through the mating of the installation hole for the reversing wheel seat and the installation pin shaft for the reversing wheel seat, the reversing wheel and the reversing wheel seat can rotate relative to the steering connection plate, thereby enabling the reversing wheel and the reversing wheel seat to swing toward and away from the guide rod. That is, the reversing wheel adjusts the angle thereof on the steering connection plate to adapt to the routing and steering of the wire incoming and outgoing ends of the cutting wire network, so that a wire network routing mechanism is formed, which solves the problem of cutting wire network shaking during high-speed operation of the cutting wire network, and improving the cutting stability and cutting quality of the apparatus.

Specifically, as shown in FIG. 15, an upper edge of the reversing wheel is tangent to an axial direction of the installation pin shaft 364-3 for the reversing wheel seat.

In an embodiment, as shown in FIG. 16, the steering connection plate also has a lower arc-shaped hole 364-4, which is located below the installation hole for the reversing wheel seat. The reversing wheel assembly also includes a lower adjustment screw 364-5 and a lower locking nut; the lower adjustment screw 364-5 passes through the lower arc-shaped hole 364-4 and the reversing wheel seat, and is threaded with the lower locking nut.

In an embodiment, the steering connection plate 363 also has an upper arc-shaped hole, which is located between the installation hole for the reversing wheel seat and the lower arc-shaped hole. The reversing wheel assembly also includes an upper adjustment screw 364-6 and an upper locking nut; the upper adjustment screw passes through the upper arc-shaped hole and the reversing wheel seat, and is threaded with the upper locking nut.

When it is required to adjust the angle of the reversing wheel, the lower locking nut and the upper locking nut are unscrewed, and the reversing wheel seat is rotated around the installation pin shaft for the reversing wheel seat. The rotation is limited by the lengths of the lower arc-shaped hole and the upper arc-shaped hole, and the reversing wheel is driven to swing toward and away from the guide rod around the installation pin shaft for the reversing wheel seat. By providing the lower arc-shaped hole, the lower adjustment screw and the lower locking nut, and also providing the upper arc-shaped hole, the upper adjustment screw and the upper locking nut, the force on the reversing wheel seat is made more uniform.

In an embodiment, as shown in FIG. 15, the slide seat 362 and the reversing wheel assembly 364 are located on the same side of the steering connection plate, making the structure of the reversing device simple. One guide rod 361 only corresponds to one reversing wheel assembly 364, and the guide rod 361 only has to bear the force of the diamond wire of the reversing wheel assembly 364 corresponding to it, with a small amount of deformation.

In an embodiment, the reversing device also includes two fixing seats 365 for the guide rod, which are respectively fixed at both ends of the guide rod 361 to fix the reversing device, making the fixation of the reversing device more stable.

In the cutting apparatus provided in this embodiment, two reversing devices 36 are arranged, one of which is used to reverse the wire incoming end of the cutting wire network, and the other of which is used to reverse the wire outgoing end of the cutting wire network. In this way, the wire incoming direction of the diamond wire can be adjusted at the wire incoming end of the cutting wire network through one reversing device, and the wire outgoing direction of the diamond wire can be adjusted at the wire outgoing end of the cutting wire network through another reversing device. The adjustments do not affect each other, and the force on each guide rod is also small. There are at least two ways of adjustment respectively, namely, adjustment in the length direction of the guide rod, and adjustment in the direction of being toward and away from the guide rod.

On the basis of the above technical solution, this embodiment also provides a schematic structural view of the wiring device. As shown in FIGS. 19 to 21, the wiring device 34 provided in this embodiment includes a wiring device body and correction conductive pillars 343. The wiring device body includes a movable wiring wheel 341-1. There are at least one pair of correction conductive pillars 343, which are spaced apart on the same side of the wiring wheel. The conductive cutting wire passes between the at least one pair of correction conductive pillars, and each correction conductive pillar is connected to a correction circuit unit that can be conducted when the cutting wire deviates and comes into contact with the correction conductive pillar 343.

In the above-mentioned wiring device, when the cutting wire does not deviate, the cutting wire passes between the at least one pair of correction conductive pillars and is not in contact with the two correction conductive pillars. As shown in FIGS. 2 and 3, when the cutting wire deviates to the left, the cutting wire will come into contact with the left correction conductive pillar. At this time, the cutting wire is connected to the left correction conductive pillar, and the correction circuit unit connected to the left correction conductive pillar is conducted. Similarly, when the cutting wire deviates to the right, the correction circuit unit connected to the right correction conductive pillar is conducted. In this way, each correction conductive pillar corresponds to a correction circuit unit, so that the deviation of the cutting wire and the direction of the deviation can be timely detected, thus providing a basis for subsequent adjustment to the cutting wire.

In an embodiment, the correction circuit unit includes a correction power supply and an analog input module. One pole of the correction power supply is connected to the correction conductive pillar 343, and the other pole of the correction power supply is connected to the analog input module. The cutting wire deviates and comes into contact with any correction conductive pillar to connect the correction conductive pillar and the analog input module of the corresponding correction circuit unit so that the correction circuit unit is conducted.

In this way, when the cutting wire is not in contact with the correction conductive pillar, the correction circuit unit and the correction conductive pillar form an open circuit. When the cutting wire comes into contact with the correction conductive pillar, the correction circuit unit and the correction conductive pillar form a closed circuit. The detection of deviation of the cutting wire is achieved through a simple structure.

In an embodiment, the wiring device also includes a correction control unit, which is connected to the correction circuit units respectively. The correction control unit is used to control the wiring wheel to move, so as to drive the cutting wire to move away from the correction conductive pillar in contact with the cutting wire.

Through the cooperation of the correction control unit with the correction circuit units and the correction conductive pillars, when the cutting wire deviates to the left and is connected to the left correction conductive pillar so that the correction circuit unit and the left correction conductive pillar are conducted, the correction control unit controls the wiring wheel to move toward the left correction conductive pillar, so that the cutting wire does not contact the two correction conductive pillars. Similarly, when the cutting wire deviates to the right and is connected to the right correction conductive pillar, the correction control unit controls the wiring wheel to move toward the right correction conductive pillar, so that the cutting wire does not contact the two correction conductive pillars.

In an embodiment, the wiring device body includes a first wiring rocker arm 341-2 and a wiring wheel rotating assembly, and the wiring wheel 341-2 is installed on one side of the first wiring rocker arm 341-2.

The wiring wheel rotating assembly includes a wiring rotating shaft 344, a connection plate 345 for the wiring rotating shaft, a second wiring rocker arm 342-2, a first counterweight block 342-1, and a second counterweight block 342-3. The connection plate 345 for the wiring rotating shaft is rotatably connected to the outer circumference of the wiring rotating shaft 344. The second wiring rocker arm 342-2 and the first wiring rocker arm 341-2 are respectively fixed to the connection plate 345 for the wiring rotating shaft and located on both sides of the wiring rotating shaft 344.

The first counterweight block 342-1 is installed at the second wiring rocker arm 342-2, and the first counterweight block 342-1 can move in a direction perpendicular to the axis direction of the wiring rotating shaft 344. The second counterweight block 342-3 is installed at the top of the connection plate for the wiring rotating shaft and at a position near the second wiring rocker arm. The second wiring rocker arm 342-2, the first counterweight block 342-1, the second counterweight block 342-3, the first wiring rocker arm 341-2, and the wiring wheel 341-1 are in a distance balanced state so that the cutting wire is located in a wire groove of the wiring wheel. When the wiring wheel is in a natural state without being subjected to a force from the cutting wire, the wiring wheel does not rotate, and there is a certain angle between the wiring wheel and the wiring rotating shaft, so that the cutting wire is located in the wire groove of the wiring wheel.

In an embodiment, a protruding installation screw rod for the first counterweight block is provided on the second wiring rocker arm 342-2 at a position away from the connection plate for the wiring rotating shaft. The first counterweight block 342-1 is rotatably installed at the installation screw rod for the first counterweight block through its own reserved threaded hole, and the first counterweight block 342-1 can move in a length direction of the installation screw rod for the first counterweight block.

In an embodiment, a protruding installation screw rod for the second counterweight block is provided at the top of the connection plate 345 for the wiring rotating shaft. The second counterweight block 342-3 is rotatably installed at the installation screw rod for the second counterweight block through its own reserved threaded hole, and the second counterweight block 342-3 can move in a length direction of the installation screw rod for the second counterweight block. The second counterweight block 342-3 is installed at the top of the connection plate 345 for the wiring rotating shaft and at a position near the second wiring rocker arm 342-2. In this way, the position of the first counterweight block can be adjusted in the length direction of the installation screw rod for the first counterweight block, and the position of the second counterweight block can be adjusted in the length direction of the installation screw rod for the second counterweight block. The torques are no longer balanced, so that the wiring wheel is driven to rotate. The first counterweight block and the second counterweight block are adjusted repeatedly until the cutting wire is located in the wire groove of the wiring wheel, ensuring the stability of the cutting wire of the wire cutting system during high-speed reciprocating operation.

In an embodiment, the wiring device also includes a wiring guide module 346, a wiring slide seat 347, and a driving motor 348 for the wiring slide seat. The wiring slide seat 347 is slidably connected to the wiring guide module 346, and the wiring rotating shaft 344 is fixed to the wiring slide seat 347. The driving motor 348 for the wiring slide seat is connected to the wiring slide seat 347 to drive the wiring slide seat 347 to move in a guiding direction of the wiring guide module 346.

The wiring rotating shaft is fixed to the wiring slide seat, that is, the wiring rotating shaft does not rotate and is fixed. The wiring slide seat moves in the guiding direction of the wiring guide module, driving the wiring wheel to also move together.

Specifically, the correction control unit is connected to the driving motor 348 for the wiring slide seat, and further controls the driving motor 348 for the wiring slide seat to operate, thus driving the wiring wheel to move to the left or to the right.

When the cutting wire deviates to the left and is connected to the left correction conductive pillar so that the left correction conductive pillar and the corresponding correction circuit unit are conducted, the correction control unit controls the operation of the driving motor 348 for the wiring slide seat, and further controls the wiring slide seat 347 to move to the left in the guiding direction of the wiring guide module 346, so that the wiring wheel moves to the left and the cutting wire does not come into contact with the two correction conductive pillars. Similarly, when the cutting wire deviates to the right and is connected to the right correction conductive pillar, the correction control unit, the driving motor for the wiring slide seat, and the wiring slide seat cooperate with each other, so that the wiring wheel moves to the right, and the cutting wire does not come into contact with the two correction conductive pillars.

In the above solution, two winding groups are arranged on the same side of the main cutting rollers and arranged in the up-and-down direction, achieving a high utilization rate of space. An upper edge of the upper reversing wheel 364-1 and an upper edge of the upper tension wheel 333 are coplanar, and located in the same horizontal plane. A lower edge of the upper tension wheel 333 is coplanar with an upper edge of the upper wiring wheel 341-1.

A lower edge of the lower reversing wheel 364-1 and an upper edge of the lower tension wheel 323 are coplanar, and located in the same horizontal plane. A lower edge of the lower tension wheel 323 is coplanar with an upper edge of the lower wiring wheel 341-1.

Each of the above winding groups only has three wheels, and its structure is relatively simple. The structure and layout of the winding groups are simple, and the utilization rate of space is high. At the same time, there is no need for additional routing wheels, so that control interference and inertia loss can be greatly reduced.

The cutting wire enters the main cutting rollers through the upper winding/unwinding roller 322, front and upper edges of the upper wiring wheel 341-1, lower, rear and upper edges of the upper tension wheel 333, and upper and front edges of the upper reversing wheel 364-1 to form a cutting wire network.

From the other end of the cutting wire network, the cutting wire enters the lower winding/unwinding roller 322 through front and lower edges of the lower reversing wheel 364-1, upper, rear and lower edges of the lower tension wheel 333, and upper and front edges of the lower wiring wheel 341-1.

The cutting wire at the connection part between the upper wiring wheel 341-1 and the upper winding/unwinding roller 322 is perpendicular to the axis of the upper winding/unwinding roller 322, and the cutting wire at the connection part between the upper wiring wheel 341-1 and the upper winding/unwinding roller 322 is vertically tangent to the cutting wire wound by the upper winding/unwinding roller 322.

The cutting wire at the connection part between the lower wiring wheel 341-1 and the lower winding/unwinding roller 322 is perpendicular to the axis of the lower winding/unwinding roller 322, and the cutting wire at the connection part between the lower wiring wheel 341-1 and the lower winding/unwinding roller 322 is vertically tangent to the cutting wire wound by the lower winding/unwinding roller 322.

The thickness of the cutting wire wound by the winding/unwinding roller 322 will change, and if the thickness increases, it will cause the originally vertically tangent wires to be no longer tangent. At this point, it is necessary to adjust the wiring wheel to swing by a certain amplitude before being fixed, so that the cutting wire at the connection part between the upper wiring wheel and the wire storage wheel continues to be vertically tangent to the cutting wire wound by the wire storage wheel.

One of the upper winding/unwinding roller 322 and the lower winding/unwinding roller 322 is used for winding, and the other is used for unwinding. Speeds of the cutting wires of the winding/unwinding roller 322 used for winding, the cutting wire network, and the winding/unwinding roller 322 used for unwinding are controlled by the program to be consistent.

The pedestal of the cutting apparatus is a support structure. The entire cutting apparatus is formed by installing the cutting area frame, the feeding device, the winding/unwinding device, an electrical unit, a central frame unit and the like on the pedestal. The design of the pedestal is the basis for the stability of other apparatuses. Taking the wire cutting apparatus for cutting thick magnetic material sheets as an example, the feeding device feeds from bottom to top. The feeding device is directly installed on the pedestal, and the material is fed through a lead screw drive mechanism.

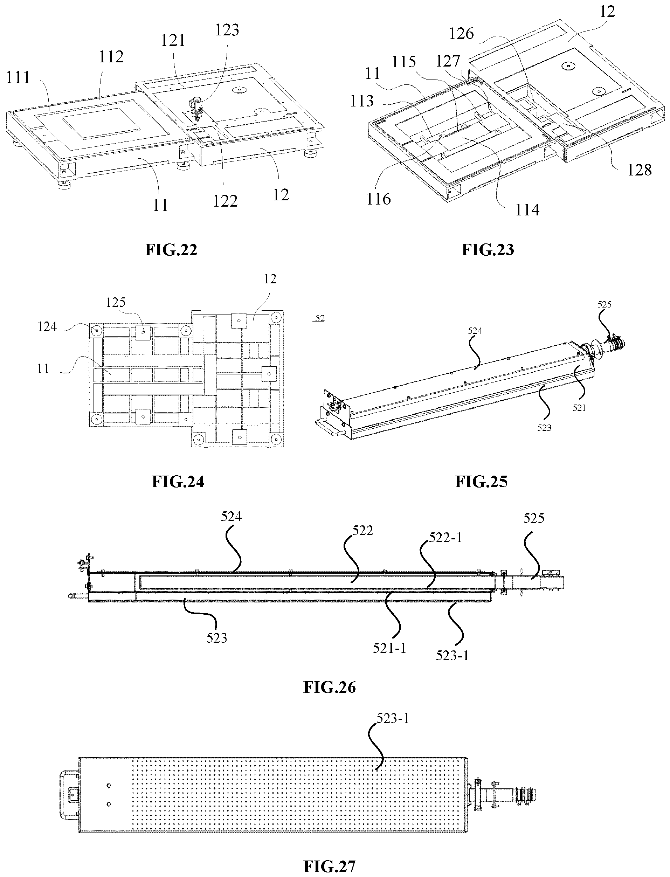

As shown in FIG. 22, specifically, the pedestal includes a pedestal body, on which the electrical unit and the central frame unit are arranged side by side with the cutting area frame respectively. The pedestal body includes a front frame pedestal and a rear frame pedestal arranged adjacent to each other. The front frame pedestal and the rear frame pedestal are integrally cast, or connected and fixed through welding, bolts, and other structures. It is preferred to use integral casting. The front frame pedestal serves as a cutting area pedestal 11, and the rear frame pedestal serves as a winding area pedestal 12. The cutting area pedestal 11 has an installation surface 111 for the cutting area frame, which is located on an upper surface of the cutting area pedestal 11 and surrounds edges of the upper surface of the cutting area pedestal 11 to form a frame. The cutting area frame 21 can be fixed to the installation surface 111 for the cutting area frame by bolts.

In addition, an installation surface 112 for the feeding device is also provided on the upper surface of the cutting area pedestal 11, and the installation surface 112 for the feeding device is located inside the area enclosed by the installation surface 111 for the cutting area frame. The feeding pedestal 41 in the feeding device 4 can be fixed to the installation surface 112 for the feeding device by bolts.

The winding area pedestal 12 has an installation surface 121 for the winding area frame, which is located on an upper surface of the winding area pedestal 12 and which corresponds to a bottom installation position of the winding area frame 31. The winding area frame 31 can be fixed to the installation surface 121 for the winding area frame by bolts.

Further, as shown in FIGS. 23 and 24, in order to increase the stability of the feeding mechanism, a support structure is arranged at the bottom of the pedestal body to provide a support force for the pedestal body. The upper surface of the cutting area pedestal 11 is recessed downward by a certain distance to form an installation slot 113 for the feeding device, which is used for installing the feeding device 4. The installation slot 113 for the feeding device can effectively reduce the height of the cutting apparatus, thereby improving the vibration of the apparatus when cutting the member-to-be-cut by lowering the center of gravity of the cutting apparatus. In addition, by installing the feeding device inside the pedestal, the strength of the cutting apparatus can also be improved.

In addition, in the prior art, wooden or hard plastic pads need to be placed under the pedestal during transportation of the cutting apparatus for the purpose of protecting leveling feet 124 of the pedestal, while also enabling the cutting apparatus to be fixed more stably on a transport vehicle. However, in practical operation, after the apparatus is transported to the customer's side and unloaded, the pads need to be properly handled. Moreover, the pads are not easy to store due to their large volume; if they are placed in the workshop, the environment of the workshop will be affected; and if they are discarded, it is required to purchase them again when the apparatus is transferred later, which will bring inconvenience to practical application.

In view of this technical problem, in the present application, transportation support blocks 125 and leveling feet 124 are provided on the support structure of the pedestal. The transportation support blocks 125 are used to provide a support force for the pedestal body during transportation and are directly fixed to a lower part of the pedestal body by screws. The thickness of the transportation support block 125 is larger than the minimum height of the leveling foot 124 and smaller than the height of the leveling foot 124 during leveling, thereby ensuring that the transportation support blocks 125 do not affect installation of the apparatus in the workshop. Specifically, the cutting area pedestal 11 and the winding area pedestal 12 are each provided with leveling feet 124 at their four corners, and the transportation support block 125 is arranged between two adjacent leveling feet 125.

In order to facilitate installation of the feeding device 4, an installation boss 114 is provided in the middle of the installation slot 113 for the feeding device. Positioning tables 115 are respectively provided in the transverse and longitudinal directions of the installation boss 114, and the positioning tables 115 specifically include first limiting strips arranged in the front-and-rear direction and second limiting strips arranged in all directions. The feeding base of the feeding device can be accurately fixed on the installation boss 114 through the first limiting strips and the second limiting strips. In addition, since the support structure of the feeding device in the cutting apparatus is the pedestal mainly driven by the lead screw, the workpiece table and slide plate boxes of the entire feeding device mechanism are both supported by the feeding lead screw. Therefore, if they are subjected to relatively large bumping forces during transportation, the lead screw will be easily affected. In order to reduce the risk of damaging the lead screw, a support table 116 for the slide plate box is arranged in the installation slot 113 for the feeding device, and the support table 116 for the slide plate box is located on one side of the installation boss 114, so that when the slide plate boxes fall to the lowest position during transportation, they can be supported, thereby reducing the risk of damaging internal parts of the lead screw due to transportation bumps.

During the cutting process of the wire cutting apparatus, a cutting liquid needs to be sprayed into the cutting chamber. Since the feeding device is directly connected to the cutting chamber, the cutting liquid can easily flow into the lower feeding device. In order to prevent the cutting liquid from remaining in the installation slot 113 for the feeding device, a liquid collection tank 126 is also provided on the pedestal body. The installation slot 113 for the feeding device is communicated with the liquid collection tank 126 through a liquid collection port 127, and a discharge pump is provided on the liquid collection tank 126 to collectively discharge the liquid flowing onto the pedestal body from the cutting chamber. Further, in order to facilitate the thorough discharge of liquid from the installation slot 113 for the feeding device, its bottom surface is arranged in an inclined way. The liquid collection tank 126 is arranged on the rear frame pedestal of the pedestal body, and a liquid collection channel 128 is also provided on top of the liquid collection tank 126 to collect the cutting liquid in the wire cutting apparatus.

On the basis of the above technical solution, the cutting device is also provided with a liquid circuit cooling system for spraying the cutting liquid onto the cutting wire network to lower the temperature of the cutting wire and further ensure that the cutting surface meets the design requirements, thereby improving the cutting quality. Spraying the cutting liquid can also wash away the magnetic material powders attached to the cutting wire and also improve the cutting quality.

As shown in FIGS. 1 and 2, the cutting liquid circuit cooling system includes a liquid supply tank 51 and a spray device 52. The liquid supply tank 51 is located at a rear end of the winding area assembly 3, and is provided with an accommodation cavity for accommodating the cutting liquid. The spray device 52 is arranged above the lower cutting roller group, and is connected to the liquid supply tank 51 through a pipeline. The spray device 52 is used to spray the cutting liquid onto the cutting wire network and the member-to-be-cut, so that on one hand, the heat generated by friction between the cutting wire network and the member-to-be-cut is taken away, and on the other hand, the powder or debris generated during the cutting process is washed away.

This embodiment provides an implementation of the spray device 52; as shown in FIGS. 25 to 28, the spray device 52 includes an upper spray box 521, a spray pipe 522, and a lower spray box 523. The bottom of the upper spray box has spray holes 521-1 of the upper spray box. The spray pipe 522 is arranged inside the upper spray box 521, and the bottom of the spray pipe has multiple spray holes 522-1 of the spray pipe. The lower spray box 523 is detachably connected to a lower side of the upper spray box 521, and an upper end of the lower spray box has a lower spray box opening. The upper spray box and the lower spray box are communicated through the spray holes of the upper spray box and the lower spray box opening, and the bottom of the lower spray box has spray holes 523-1 of the lower spray box.

The spray device of the embodiment of the present application is used to spray the cutting liquid onto the cutting wire network. The spray device includes the spray pipe, the upper spray box and the lower spray box. The spray pipe is arranged inside the upper spray box, and the cutting liquid inside the spray pipe flows out through the spray holes of the spray pipe and enters the upper spray box; the cutting liquid in the upper spray box flows out through the spray holes of the upper spray box and enters the lower spray box through the lower spray box opening; the cutting liquid in the lower spray box flows out through the spray holes of the lower spray box and is sprayed onto the cutting wire network. In this way, the cutting liquid sequentially passes through the spray holes of the spray pipe, the spray holes of the upper spray box, and the spray holes of the lower spray box before being sprayed onto the cutting wire network. This provides a structural basis for adjusting the spraying area of the cutting liquid directly sprayed onto the cutting wire network eventually and the flow rate of a single stream of sprayed liquid, etc., which is advantageous for achieving personalized spraying for the cutting wire network. Compared with the prior art, the technical problem of single function of existing spray devices is solved.

In an embodiment, the area of the spray holes 521-1 of the upper spray box arranged in the upper spray box 521 is larger than the area of the spray holes 522-1 of the spray pipe arranged in the spray pipe 522. The area of the spray holes 523-1 of the lower spray box arranged in the lower spray box 523 is equal to or larger than the area of the spray holes 521-1 of the upper spray box arranged in the upper spray box 521. In this way, the spraying area for the cutting wire network is necessarily larger than the area of the spray holes of the spray pipe arranged in the spray pipe, resulting in a larger actual spraying area for the cutting wire network. In the prior art, it is the area of the spray holes arranged in the spray pipe that determines the spraying area for the cutting wire network, resulting in a smaller spraying area for the cutting wire network.

In an embodiment, the aperture of the spray holes 521-1 of the upper spray box is smaller than the aperture of the spray holes 522-1 of the spray pipe. The aperture of the spray holes 523-1 of the lower spray box is equal to or larger than or smaller than the aperture of the spray holes 521-1 of the upper spray box. In this way, the single stream of spray onto the cutting wire network is finer and the spray is more uniform.

In an embodiment, the lower spray box 523 is detachably connected to the lower side of the upper spray box 522, so that the lower spray box 523 can be detached from the lower side of the upper spray box 522 for facilitating cleaning of impurities, foreign objects and the like inside the lower spray box. A lower edge of the upper spray box is provided with a hanging plate 521-2, and the top of the lower spray box has a hanging groove. The lower spray box is hanged to the edge of the hanging plate 521-2 through the hanging groove for facilitating installation and disassembly of the lower spray box. The detachable connection between the lower spray box and the upper spray box is achieved through the hanging plate and the hanging groove, enabling the hanging connection between the lower spray box and the upper spray box. The hanging method can easily achieve hanging and removal, and can facilitate frequent removal of the lower spray box.

In an embodiment, the top of the upper spray box is a frame type top 521-3. The spray device also includes a cover plate 524, which is detachably connected to the frame type top 521-3 through bolts and screw holes. When the cover plate is removed, impurities, foreign objects and the like inside the upper spray box can be cleaned through the hollow part of the frame type top.

In an embodiment, the upper spray box 521 is a long strip shaped upper spray box, and the lower spray box 523 is a long strip shaped lower spray box. Both the upper spray box and the lower spray box have a long strip shape, which matches the shape of the spray pipe and also makes the spray zone be long strip shaped. Corresponding to the cutting position of the cutting wire network, targeted spraying of the cutting position of the cutting wire network can be achieved. The hanging plate 521-2 is arranged at the long side of the upper spray box, and the hanging groove is arranged at the long side of the lower spray box, which can realize pulling of the lower spray box along the long side of the upper spray box, realize the hanging and detaching between the hanging groove and the hanging plate, and facilitate the cleaning and maintenance of the lower spray box.

In an embodiment, the spray device also includes a spray adapter pipe 525, which is fixedly connected to one side of the upper spray box, and the spray pipe 522 is connected to and communicated with the spray adapter pipe 525. The spray adapter pipe is used to connect with a liquid supply pipeline of the cutting liquid supply device. In this way, the cutting liquid is supplied to the spray device through the liquid supply pipeline and the spray adapter pipe.

Optionally, there are multiple spray pipes arranged side by side and spaced apart in the upper spray box. In this way, more cutting liquid enters through all the spray pipes. Specifically, the spray holes of the upper spray box and the spray holes of the lower spray box are both honeycomb shaped spray holes.

In the spray device of the embodiment of the present application, the cutting liquid is collected and dispersed through the spray pipe, the upper spray box and the lower spray box, ultimately allowing the cutting liquid flowing out from the honeycomb shaped spray holes of the lower spray box to cover the entire spray zone and be evenly sprayed onto the cutting wire network, achieving cooling and lubrication of the cutting wire network and the member-to-be-cut, and ensuring the cutting stability and cutting quality of the cutting apparatus.

For the liquid supply tank 51, this embodiment also provides an implementation thereof: as shown in FIG. 1 and FIGS. 29 to 31, the liquid supply tank 51 is an integrated box structure, and its inner part is divided into a drainage area 511, a flow area 512, and a liquid supply area 513. The flow area 512 is arranged between the drainage area 511 and the liquid supply area 513 for storing the cutting liquid and precipitating impurities in the cutting liquid. The drainage area 511, the flow area 512, and the liquid supply area 513 are sequentially communicated through overflow holes. The drainage area 5111 is provided with a liquid return port of the liquid supply tank for receiving the cutting liquid flowing out of the cutting device, and the liquid supply area 513 is provided with a liquid supply port of the liquid supply tank for supplying the cutting liquid to the cutting device.

After cooling and lubricating the cutting wire network, the cutting liquid enters the drainage area of the liquid supply tank through the liquid return port of the liquid supply tank. After the cutting liquid in the drainage area is stored in the drainage area and precipitates, as the cutting liquid in the drainage area becomes more and more, the upper part of the cutting liquid in the drainage area overflows into the flow area through the overflow hole. The cutting liquid in the flow area continues to precipitate in the flow area, and as the cutting liquid in the flow area becomes more and more, the upper part of the cutting liquid in the flow area overflows into the liquid supply area through the overflow hole. The cutting liquid first precipitates and then overflows, so that some of the granular impurities in the cutting liquid settle. After multiple times of settlement, the granular impurities in the cutting liquid in the liquid supply area are greatly reduced. The cutting liquid in the liquid supply area is ready for the next time of cooling and lubricating the cutting wire through the liquid supply pipe.

In an embodiment, there are multiple flow areas 512, and adjacent flow areas 512 are communicated through the overflow holes. In a specific implementation, the liquid supply tank 51 includes a liquid supply tank body and multiple partitions, with an upper part of the partition having an overflow hole. Each partition is arranged inside the liquid supply tank body to divide the liquid supply tank body into the drainage area 511, the flow area 512 and the liquid supply area 513. The drainage area 511 and the flow area 512 are communicated through the overflow hole, and the flow area 512 and the liquid supply area 513 are communicated through the overflow hole.

The drainage area 511 is communicated with a liquid return pipe 534 through the liquid return port of the liquid supply tank, and the liquid supply area 513 is communicated with a liquid supply pipe 535 through the liquid supply port of the liquid supply tank. The liquid return pipe 534 and the liquid supply pipe 535 are part of the pipelines of the liquid cooling system of the cutting apparatus.

After cooling and lubricating the cutting wire, the cutting liquid enters the drainage area of the liquid supply tank through the liquid return pipe and the liquid return port of the liquid supply tank. After the cutting liquid in the drainage area precipitates in the drainage area and, as the cutting liquid in the drainage area becomes more and more, the upper part of the cutting liquid in the drainage area overflows into the flow area through the overflow hole. The cutting liquid in the flow area continues to precipitate in the flow area, and as the cutting liquid in the flow area becomes more and more, the upper part of the cutting liquid in the flow area overflows into the liquid supply area through the overflow hole. The cutting liquid first precipitates and then overflows, so that some of the granular impurities in the cutting liquid settle. After multiple times of settlement, the granular impurities in the cutting liquid in the liquid supply area are greatly reduced. The cutting liquid in the liquid supply area is ready for the next time of cooling and lubricating the cutting wire through the liquid supply pipe. The liquid supply tank is used to collect and store recycled cutting liquid, and the cutting liquid is used to cool and lubricate the cutting wire network.

Further, the liquid supply tank 51 also includes overflow hole filter screens, which are fixed at the overflow holes and cover the overflow holes. In this way, the cutting liquid is filtered and purified each time it flows through the overflow holes.

In an embodiment, the liquid supply tank body is a rectangular liquid supply tank body, and the partitions include a long partition 514-1 and multiple short partitions 514-2. The long partition 514-1 is fixedly connected to an inner bottom of the liquid supply tank body and two short tank walls of the liquid supply tank body, dividing the liquid supply tank body into a first half tank body and a second half tank body. The overflow hole of the long partition is a long overflow hole 514-11.

The short partitions 514-2 are fixed inside the first half tank body, and the short partitions inside the first half tank body are fixedly connected to the inner bottom of the first half tank body, a long tank wall of the first half tank body, and the long partition. The short partition is fixed inside the second half tank body, and the short partition inside the second half tank body is fixedly connected to the inner bottom of the second half tank body, a long tank wall of the second half tank body, and the long partition. The overflow holes of the short partitions are short overflow holes.

The drainage area and the liquid supply area are located on the same side of the first half tank body and the second half tank body respectively, and the long overflow hole 514-11 is located on a side away from the drainage area 511. In this way, the drainage area is located at the left end of the first half tank body, and the liquid supply area is located at the left end of the second half tank body. The cutting liquid enters from the drainage area, passes through the flow area, and reaches the liquid supply area, which is the furthest path. In this longest path, the cutting liquid can sufficiently precipitate, minimizing impurities in the cutting liquid in the liquid supply area.

In an embodiment, two short partitions 514-2 are fixed inside the first half tank body, and the overflow holes of the short partitions are short overflow holes 514-21. The short overflow holes 514-21 of the short partitions fixed inside the first half tank body are staggered, forming one drainage area 511 and two flow areas 512. One short partition 514-2 is fixed inside the second half tank body, forming one liquid supply area and one flow area. The overflow holes of the two short partitions in the first half tank body are staggered, allowing the cutting liquid in the flow areas formed by the two short partitions to settle better.

In an embodiment, the cutting apparatus also includes a heat exchanger 541 and a coolant machine 542 for the liquid supply tank. The liquid supply pipe and the heat exchanger 541 are connected through pipelines to transport the cutting liquid in the liquid supply tank 51 to the heat exchanger 541. The coolant machine 542 for the liquid supply tank and the heat exchanger 541 are connected through pipelines to transport a coolant in the coolant machine 542 for the liquid supply tank to the heat exchanger 541. In the heat exchanger, the cutting liquid and the coolant are in their respective pipelines, and heat exchange is achieved through tight contact between the pipelines. The cutting liquid is cooled, and the temperature of the coolant rises.

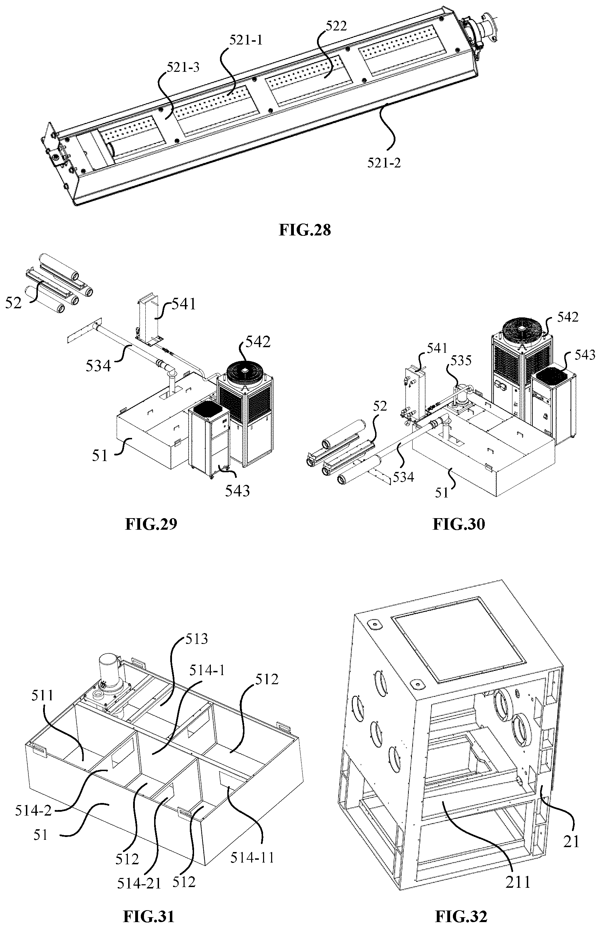

Further, as shown in FIG. 32, the cutting area frame 21 has two drainage slopes 211, which are arranged below the cutting wire network and located on both sides of the cutting wire network.

The spray device 52 for spraying the cutting liquid for cooling and lubricating the cutting wire network and the member-to-be-cut is installed inside the cutting area frame 21 and located above the cutting wire network. The spray device 52 is connected to the heat exchanger 541 through a pipeline.

Two filter screens 212 of the cutting area frame are installed on the drainage slopes 211 respectively to filter the cutting liquid; the cutting area frame is provided with lower-end drainage ports 211-1 of the drainage slopes at lower ends of the drainage slopes.

The heat exchanger is connected to the spray device through a pipeline, and the cooled cutting liquid is communicated to the spray device. The cutting liquid is sprayed by the spray device onto the main roller assembly to cool and lubricate the cutting wire. The sprayed cutting liquid falls onto the filter screens of the cutting area frame, and falls on the drainage slopes after being filtered by the filter screens of the cutting area frame. The cutting liquid on the drainage slopes falls down and flows out through the lower-end drainage ports of the drainage slopes.

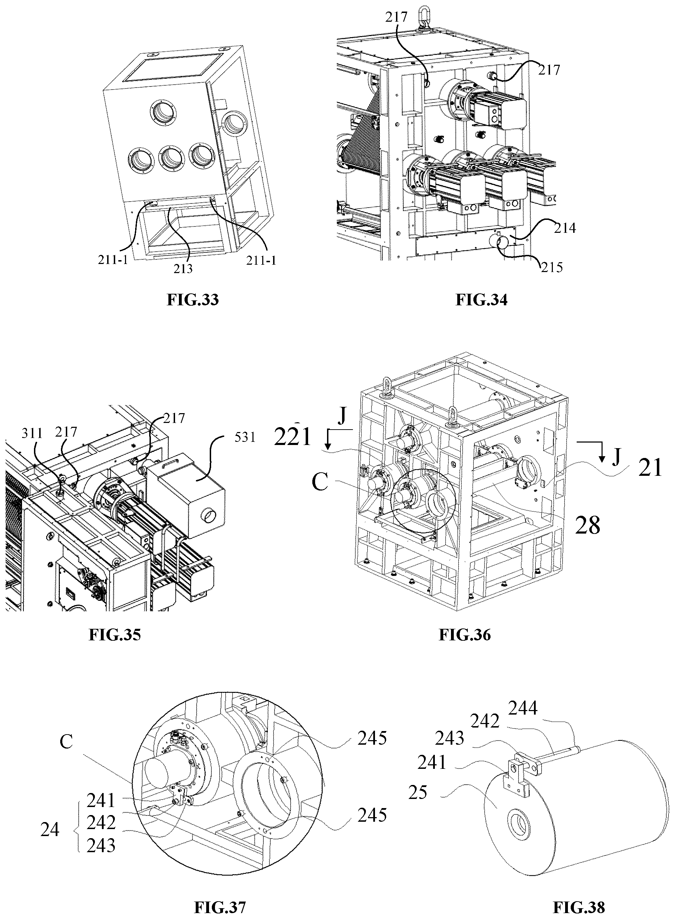

In an embodiment, as shown in FIGS. 33, a drainage slot 213 is formed on a side of the cutting area frame that is away from the lower-end drainage ports of the drainage slopes. Further, a cover plate 214 of the drainage slot is fixed at a slot opening of the drainage slot. A drainage port 215 of the drainage slot runs through the cover plate 214 of the drainage slot. The drainage port 215 of the drainage slot is communicated with the liquid return port of the liquid supply tank through the liquid return pipe 534.

The cutting liquid flowing out of the lower-end drainage ports of the drainage slopes flows into a cavity enclosed by the drainage slot and the cover plate of the drainage slot. The cutting liquid in the cavity enclosed by the drainage slot and the cover plate of the drainage slot enters the liquid return pipe through the drainage port of the drainage slot and finally enters the drainage area of the liquid supply tank.

Further, the cutting area pedestal 11 is provided with a flow guide slot for the cutting area pedestal, and the winding area pedestal 12 is provided with a flow guide slot 121 for the winding area pedestal, a flow guide area 122 for the winding area pedestal, and a reflux pump 123. The flow guide slot for the cutting area pedestal and the flow guide slot for the winding area pedestal are respectively communicated with the flow guide area for the winding area pedestal; the reflux pump 123 is communicated with the flow guide area for the winding area pedestal and the drainage port of the drainage slot through a pipeline.

Part of the sprayed cutting liquid falls onto the filter screens of the cutting area frame, and another part of the sprayed cutting liquid falls onto the cutting area pedestal. The cutting liquid that falls onto the cutting area pedestal is collected into the flow guide slot for the cutting area pedestal. There will also be cutting liquid falling onto the winding area pedestal, and the cutting liquid falling onto the winding area pedestal is collected into the flow guide slot for the winding area pedestal. The cutting liquid in the flow guide slot for the cutting area pedestal and the cutting liquid in the flow guide slot for the winding area pedestal are collected in the flow guide area for the winding area pedestal. The reflux pump pumps the cutting liquid in the flow guide area for the winding area pedestal to the drainage port of the drainage slot, and the cutting liquid then enters the drainage area of the liquid supply tank through the liquid return pipe.

The main cutting rollers 221 are installed inside the cutting area frame 21. The main cutting rollers 221 are installed inside the cutting area frame 21 through the bearing boxes 223, and the side of the cutting area frame 21 has a coolant inlet for the bearing box and a coolant return port for the bearing box. A coolant machine 543 for the bearing box is connected to the coolant inlet for the bearing box and the coolant return port for the bearing box respectively through pipelines. The coolant in the coolant machine for the bearing box enters the coolant inlet for the bearing box through the pipeline, cools the bearing boxes 223, and flows back from the coolant return port for the bearing box.

Further, as shown in FIGS. 34 and 35, the top of the winding area frame 31 is provided with an exhaust port 311 of the winding area. An oil mist collection device 531 is fixed on the outer top of the winding area frame 31. The side of the cutting area frame 31 has an exhaust port 217 of the cutting area at a position above the main cutting rollers 221. The exhaust port 311 of the winding area is connected to the oil mist collection device 531 through an oil discharge pipe of the winding area, which extends to the side of the winding groups of the winding area frame. The exhaust port 217 of the cutting area is connected to the oil mist collection device 531 through an oil discharge pipe of the cutting area, which extends to the side of the cutting device of the cutting area frame. The oil mist generated inside the winding area frame enters the oil mist collection device through the exhaust port of the winding area, while the oil mist generated inside the cutting area frame enters the oil mist collection device through the exhaust port of the cutting area.

The oil mist collection device 531 is used to separate the collected oil mist into gas and liquid. The oil mist collection device has an exhaust port and a drainage port. The drainage port is connected to the liquid supply tank 51 through a pipeline, and the separated liquid is recycled to the liquid supply tank 51, which improves the utilization rate of the cutting liquid, and reduces adhesion of the oil mist to the frame, which would otherwise increase maintenance difficulty. The separated gas is discharged from the exhaust port.

As shown in FIGS. 36 to 38, this embodiment further optimizes the cutting area assembly. In the technical field of wire cutting apparatus, the main cutting rollers 221 are usually installed on the cutting area frame 21 through high-precision bearing boxes. During use, the appropriate main cutting roller 221 is used for replacement according to the thickness of the material slices to be processed. The common replacement method is to pull out the bearing box by a certain distance from the front of the cutting area frame 21 so that the main cutting roller 221 is detached from the bearing box, and then replace the main cutting roller 221. After replacement, the bearing box is retracted to its original position and docked with the main cutting roller 221 for installation.

During this process, the distance by which the bearing box is pulled out should not be too large. If it is too large, the bearing box may easily fall off the cutting area frame 21, causing damage to the bearing box in mild cases and injury to the operator in severe cases. Therefore, in view of this problem, the present application provides an embodiment of the cutting area assembly. The main cutting rollers 221 are installed on the cutting area frame 21 through bearing boxes 25. The cutting area frame 21 is provided with a bearing box limiting mechanism 24 for preventing the bearing box 25 from slipping off. The bearing box limiting mechanism 24 includes a bearing box connection block 241 and a limiting assembly. The bearing box connection block 241 is movably arranged on the cutting area frame 21 through the limiting assembly, and the bearing box connection block 241 is used to define a maximum distance of the movement of the bearing box 25.

The number of the bearing box limiting mechanism 24 is at least one, and all the bearing box limiting mechanisms 24 are evenly arranged on the circumferential side of the bearing box 25. Preferably, the number of the bearing box limiting mechanisms 24 is two, and the two bearing box limiting mechanisms 24 are symmetrically arranged on both sides of the circumference of the bearing box 25, which is advantageous for maintaining horizontal pulling out when dragging the bearing box 25, and ensuring that the bearing box 25 will not detach from the cutting area frame 21 under the action of the bearing box connection blocks 241 and the limiting assemblies.

Specifically, the limiting assembly includes a bearing box limiting rod 242, and a limiting installation hole 245 provided on the cutting area frame 21. The bearing box limiting rod 242 is arranged inside the limiting installation hole 245; one end of the bearing box limiting rod 242 is connected to the bearing box connection block 241, and the other end is provided with an anti-detachment part to prevent the bearing box limiting rod 242 from slipping out of the limiting installation hole 245. When the bearing box is pulled out, it drives the bearing box connection block 241 to move, and the bearing box connection block 241 drives the bearing box limiting rod 242 to move axially in the limiting installation hole 245. When the anti-detachment part contacts one end of the limiting installation hole 245, the bearing box limiting rod 242 holds on the bearing box connection block 241 to block the bearing box from continuing moving outward, thereby preventing the bearing box from being pulled out excessively and leaving the cutting area frame 21.

For the mechanism that defines the movement distance of the bearing box limiting rod 242 in the limiting assembly, in an embodiment, a bearing box limiting block 243 is arranged at the outer end of the limiting installation hole 245, and a limiting hole is provided on the bearing box limiting block 243. The anti-detachment part is an anti-detachment protrusion 244 arranged at the end of the bearing box limiting rod 242, and the diameter of the limiting hole is larger than the diameter of the rod body of the bearing box limiting rod 242 and smaller than the diameter of the bearing box limiting rod 242 where the anti-detachment protrusion 244 is provided. The bearing box limiting block 243 blocks at the outer end of the limiting installation hole 245, thereby preventing the bearing box limiting rod 242 from slipping out of the limiting installation hole 245 and achieving the technical effect of limiting.

In another alternative embodiment of the limiting mechanism, a step hole integrated with the cutting area frame 21 is cast at one end of the limiting installation hole 245 that is away from the main cutting roller 221. The diameter of the step hole is larger than the diameter of the rod body of the bearing box limiting rod 242 and smaller than the diameter of the bearing box limiting rod 242 where the anti-detachment protrusion 244 is provided, which can achieve the same limiting effect as the above embodiment.

In another embodiment of the bearing box limiting rod 242, in order to prevent the bearing box limiting rod 242 from occupying internal space of the cutting chamber and optimize the spatial layout, the bearing box limiting rod 242 is set as a telescopic rod, which can be fully retracted into the inner wall of the cutting area frame 21 when not in use. Specifically, the bearing box limiting rod 242 has a telescopic structure composed of multiple layers of sleeve rods. The diameter of its outer sleeve rod is equal to the diameter of the limiting installation hole. The bearing box connection block 241 is connected to one end of the inner sleeve rod that is away from the main cutting roller 221. In this embodiment, an anti-detachment part is arranged at the distal end of the outer sleeve rod, or the outer sleeve rod and the limiting installation hole on the cutting area frame 21 are directly welded into one piece. During operation, the bearing box is pulled to drive the bearing box connection block 241 to move, so that the telescopic rod extends to a predetermined distance in sequence, which is advantageous for avoiding an excessive pulling distance of the bearing box.

Since the bearing box sometimes needs to be disassembled for maintenance in practical operation, the connection relationship between the bearing box limiting mechanism 24 and the bearing box is set as the following two implementations in the present application. In the first implementation, one end of the bearing box connection block 241 is connected to the bearing box limiting rod 242 of the limiting assembly, and the other end is fixed to the bearing box by bolts. In this way, the bearing box, the bearing box connection block 241, and the bearing box limiting rod 242 operate in association, moving and stopping at the same time, and the predetermined distance of the bearing box limiting rod 242 can limit the movement distance of the bearing box. Specifically, the bearing box connection block 241 is a T-shaped structure, with its lower part connected to the bearing box limiting rod 242 and its upper part connected to the bearing box through at least two bolt structures. In the second implementation, the bearing box connection block 241 is rotatably arranged on the bearing box limiting rod 242 of the limiting assembly. Preferably, the bearing box connection block 241 can rotate by 90 degrees on the bearing box limiting rod 242, so that it can contact with and disengage from the outer wall of the bearing box. When replacing the main cutting roller 221 without disassembling the bearing box, the bearing box connection block 241 is rotated to a state of contacting with the bearing box, and the movement of the bearing box can drive the bearing box connection block 241 to move, driving the bearing box limiting rod 242 to move together in association; when it is necessary to disassemble the bearing box, the bearing box limiting block 243 is also first rotated to the contact position, then the bearing box is pulled to the maximum distance defined, and then the bearing box connection block 241 is rotated to make it parallel to the circumferential tangent line of the bearing box, thereby disengaging from the contact with the bearing box. Then, auxiliary tools are used to disassemble the bearing box, making the operation more convenient and flexible.

Since the inner side of the bearing box extends into the cutting chamber by a certain distance in the working state of the wire cutting machine, magnetic mud or silicon powder will deposit on the outer wall of the bearing box inside the cutting chamber after completion of cutting. At this time, when disassembling or installing the bearing box, the magnetic mud or silicon powder on its outer surface will be brought into the limiting installation hole of the bearing box, affecting the installation and normal operation of the bearing box. In view of this problem, a dust-proof device is arranged between the bearing box and the cutting area frame 21 in the present application, and the dust-proof device is located at one end of a bearing box installation cylinder that is close to the main cutting roller 221. Specifically, a step slot is provided on an inner wall of the installation cylinder, and the dust-proof device is a FB type dust-proof ring. The dust-proof ring is fixed in the step slot. In this way, during the process of pulling out the bearing box, a front end of the dust-proof ring is in interference fit with the outer surface of the bearing box, which will scrape off the magnetic mud on the surface of the bearing box and prevent the magnetic mud on the surface of the bearing box from contaminating the inner wall of the installation cylinder and the external working environment.

The bearing box limiting mechanism 24 corresponding to the above solution is arranged on the bearing boxes 25 of each main cutting roller 221 in the cutting apparatus, achieving the effect of protecting the safety of the bearing box 25.

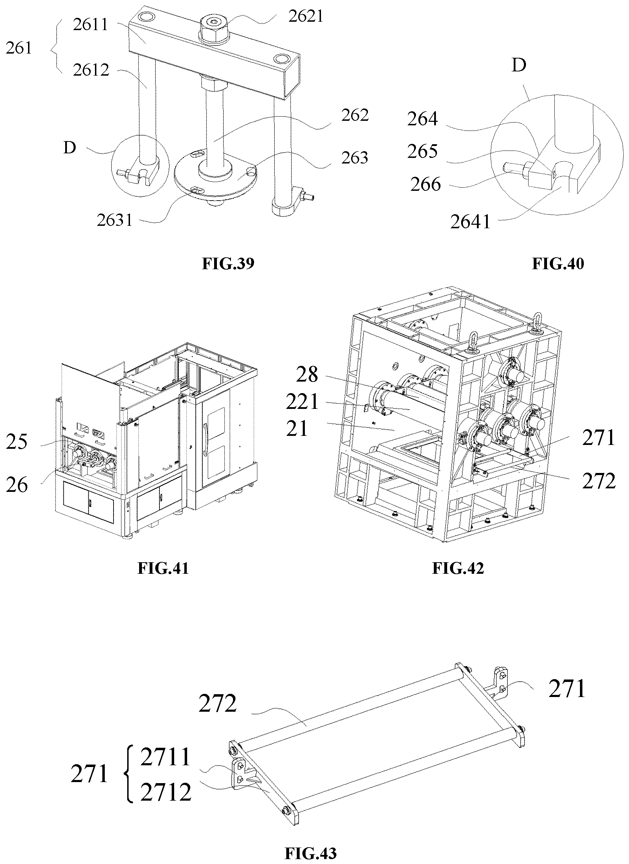

As shown in FIGS. 39 to 41, this embodiment also provides a drawing tooling 26 for removing the bearing box 25 from the installation hole of the cutting area frame 21. The drawing tooling 26 includes a drawing frame 261, a drawing rod 262, and a drawing plate 263. The drawing plate 263 is connected to the drawing frame 261 through the drawing rod 262, and the drawing plate 263 is provided with a first fixing bayonet 2631 for fixed connection with the bearing box 25. When in use, the first fixing bayonet 2631 is clamped on the bolt of the bearing box 25, and the bolt on the bearing box 25 is used to install an end cap. When removing the bearing box 25, this original bolt structure is used to design the structure of the first fixing bayonet 2631 on the drawing plate 263. The first fixing bayonet 2631 can be set at different positions on the drawing plate 263 according to different types of cutting apparatus, or the drawing plates 263 used on multiple types of cutting apparatus are combined together to make it more convenient to use. After the drawing plate 263 and the bearing box 25 are fixed, the drawing frame 261 is fixed on the cutting chamber frame, and the bearing box 25 can be removed from the cutting chamber frame through the drawing rod 262. The entire process has an easy operation. In an alternative embodiment of this technical solution, two support rods are separately arranged outside end cap screws to match the clamping of the first fixing bayonet.

The drawing frame 261 in this technical solution includes a drawing crossbeam 2611 and at least two drawing support rods 2612. The preferred design is a gantry structure, in which one drawing crossbeam 2611 is provided with one drawing support rod 2612 at each end thereof respectively, and the drawing support rods 2612 can be fixed to the cutting chamber frame to provide a support force for the drawing crossbeam 2611 when drawing the bearing box 25. In addition, in order to reduce the weight of the drawing tooling, the drawing crossbeam 2611 is made of a square hollow profile, which is cost effective and lightweight while ensuring the support force.

In order to increase the stability of the drawing frame 261 in the present application, a limiting support block 264 is arranged at the bottom of the drawing support rod 2612 of the drawing frame 261, which is perpendicular to the drawing support rod 2612. By arranging the perpendicular limiting support block 264, the contact area between the drawing support rod 2612 and the cutting area frame can be increased, thereby ensuring the stability of the drawing tooling during operation.

In addition, the limiting support block 264 is integrated with the drawing support rod 2612 to ensure the rigidity of the structure. Providing a second fixing bayonet 2641 on one side of the limiting support block 264 can facilitate fixation to the bolt on the cutting chamber frame. When in use, the second fixing bayonet 2641 can be directly clamped onto the corresponding bolt on the cutting chamber frame, which is convenient and fast. After the drawing frame 261 is fixed, a support hole provided in the middle of the drawing crossbeam 2611 allows the drawing rod 262 to pass through. Using the drawing crossbeam 2611 as the force point, the drawing rod 262 is pulled to drive the drawing plate 263 to move linearly, thereby pulling out the bearing box 25. A power unit of the drawing rod 262 in this technical solution can be a motor which drives the drawing rod 262 to move while saving manpower, or it can be set as a hydraulic rod which pulls and drags the drawing rod 262 to work under the action of hydraulic pressure.

In the technical solution of the present application, the drawing rod 262 can also be provided with a screwing nut 2621, which can be either controlled by a power device or manually operated by a torque wrench. In this embodiment, the drawing rod 262 is a threaded rod, and the drawing plate 263 is threaded with the drawing rod 262. The drawing plate 263 is driven to move linearly by rotating the drawing rod. The screwing nut 2621 is integrated with the drawing rod 262, preferably with an inner hexagonal screwing hole provided on the side of the screwing nut 2621 that is away from the drawing rod 262. By setting the nut and the inner hexagonal screwing hole structure, the control can be selected according to the needs. If the required drawing force is small, the inner hexagonal screwing hole can be used to control the movement of the drawing rod 262, which is easy and fast to operate with a small action amplitude; and if a large twisting force is required to drive the drawing rod 262 to rotate, the nut 2621 can be directly screwed with a torque wrench, which is a more user-friendly design.

In actual operation and use, due to the action of the rotational force of the drawing rod 262 during the drawing process, the second fixing bayonet 2641 under the drawing support rod 2612 or the first fixing bayonet 2631 on the drawing plate 263 is prone to slipping off the fixing bolt. In order to solve this problem, in the technical solution of the present application, a ball head screw rod 266 is provided on the side wall of the opening of the first fixing bayonet 2631 or/and the second fixing bayonet 2641, and its elastic ball head 265 protrudes from the inner wall surface of the fixing bayonet. Therefore, when the fixing bayonet is clamped onto the bolt, by only gently pressing down the elastic ball head 265 using an external force, the bolt can be clamped into the fixing bayonet. After the bolt is in place, the elastic ball head will automatically pop out to clamp the bolt. If there is no external force at this time, it is not easy for the bolt to be detached from the fixing bayonet. The operator can fix one drawing support rod 2612 before fixing the other drawing support rod 2612, reducing the operational requirements. By providing a fastening nut on the ball head screw rod 266, the ball head screw rod 266 is prevented from loosening. During operation, the ball head screw rod 266 can directly abut against the bolt body of the fixing bolt on the cutting chamber frame, preventing sliding between the bolt and the limiting support block, and ensuring the support stability of the drawing support rod 2612.

High hardness and brittleness materials generally have a higher density and heavier mass per unit volume, so the member-to-be-cut made of high hardness and brittleness materials usually requires the use of auxiliary devices for material charging during cutting. In the prior art, an auxiliary trolley for material charging is usually used to transport the member-to-be-cut that will be processed to a material inlet of the cutting apparatus, and then the member-to-be-cut is manually pushed to a preset position on a material charging table. However, since the member-to-be-cut has a certain length, there is a distance between the auxiliary trolley for material charging and the material charging table that is suspended. At this time, if external force is not used, collisions often occur when transferring the member-to-be-cut, causing damage to the member-to-be-cut or the cutting apparatus, and resulting in unnecessary loss.

In view of this drawback, the present application provides a specific solution for the cutting area frame 21. As shown in FIGS. 42 to 45, a front part of the cutting area frame 21 is provided with a material inlet, and an auxiliary device 27 for material charging that is parallel to the initial position of the material charging table is provided on the material inlet. Through the auxiliary device 27 for material charging, the support transition of the member-to-be-cut between the material charging trolley and the material charging table can be achieved, preventing unnecessary loss caused by the hanging center of gravity of the member-to-be-cut.

The auxiliary device for material charging includes an installation bracket 271 for material charging and at least one auxiliary rod 272 for material charging. The auxiliary rods 272 for material charging are fixedly arranged on the cutting area frame 21 through the installation bracket 271 for material charging, and all the auxiliary rods 272 for material charging are arranged in parallel on the material inlet and perpendicular to the material incoming direction. The installation bracket 271 for material charging mainly realizes the fixing and supporting function for the auxiliary rods 272 for material charging. During the material charging process, the member-to-be-cut is mainly transported and transitioned through the auxiliary rods 272 for material charging. The number of the auxiliary rods 272 for material charging can be one, two or multiple, and the specific selection can depend on the cutting environment.

The auxiliary rod 272 for material charging in this solution is a cylindrical structure, which can effectively reduce the contact area between the auxiliary rod 272 for material charging and the member-to-be-cut, and reduce friction. Preferably, the auxiliary rod 272 for material charging is a roller shaft structure that can rotate around a rotating shaft, and it can turn the hard friction between the member-to-be-cut and the auxiliary rod 272 for material charging into rolling friction, making material charging more lightweight. In addition, two auxiliary rods 272 for material charging are preferably provided, since the two auxiliary rods 272 for material charging can form a support surface. Considering both cost and working environment, the arrangement of two auxiliary rods 272 for material charging is more reasonable.

In order to increase the firmness of the fixation of the auxiliary device for material charging, the installation bracket 271 for material charging includes two fixing parts 2711 for material charging and two support parts 2712 for material charging, which are integrated respectively. The support parts 2712 for material charging are respectively installed on both sides of the material inlet on the cutting area frame 21 through the fixing parts 2711 for material charging, and the support parts 2712 for material charging are horizontally arranged. The auxiliary rods 272 for material charging are respectively fixed on the support parts 2712 for material charging on both sides of the material inlet through bolt structures.

The fixing part 2711 for material charging is specifically an L-shaped fixing plate. Setting the fixing plate into an L-shape can increase the contact area between the fixing part 2711 for material charging and the cutting area frame 21, thereby increasing the firmness and stability of the fixation (which can be realized by multiple bolt structures). The support part 2712 for material charging is a horizontally arranged support plate or a horizontally arranged rectangular support frame. When it is a support plate, the auxiliary rod 272 for material charging is connected to it through a bolt structure, and a bearing structure is preferably arranged at the connection point to fix the auxiliary rod 272 for material charging; and when the support part 2712 for material charging is a rectangular support frame, the auxiliary rod 272 for material charging can be omitted, or the auxiliary rod 272 for material charging can be rotatably arranged in the form of a sleeve at a connecting rod of the support frame.

In another embodiment, the auxiliary device 27 for material charging is detachably arranged on the material inlet of the cutting area frame 21. Specifically, U-shaped installation slots are arranged on the cutting area frame 21 on both sides of the material inlet. The U-shaped installation slots can be integrated with the cutting area frame 21, or fixed to the cutting area frame 21 through auxiliary welding or bolts. Fixed limiting blocks corresponding to the U-shaped installation slots are provided on both sides of the installation bracket 271 for material charging. The fixed limiting block is of a square body shape and can be directly placed into the installation slot during installation. Setting the fixed limiting block into a square body shape can prevent the installation bracket 271 for material charging from rotating. Preferably, the width of the U-shaped installation slot is equal to that of the fixed limiting block, and the bottom of the U-shaped installation slot is a planar structure that matches the fixed limiting block.

A material blocking box 28 is also arranged in the cutting area frame 21, and the material blocking box 28 is located between two adjacent cutting rollers in the cutting chamber frame. The material blocking box 28 is fixed to the cutting area frame 21 through its two ends in the length direction. Specifically, the material blocking box 28 includes a material blocking frame 281 and a fixing bracket 282 for material blocking. Upper and lower parts of the material blocking frame 281 are both open; the upper opening is used for the cutting liquid to flow onto the cutting wire network, and the lower opening is used for the material cut on the bottom feeding worktable to enter the material blocking box 28. The main function of the material blocking box 28 is to prevent the cut material from tipping and touching the cutting rollers, and the material blocking frame 281 is installed on the frame body through the fixing bracket 282 for material blocking. The material blocking frame 281 can have an integral structure, or a split structure formed by connecting independent baffles.

The use of the above-mentioned auxiliary device 27 for material charging can facilitate material charging. The member-to-be-cut is transported to the position of material charging port by the material charging trolley, then placed onto the auxiliary rods 272 for material charging, and gently pushed by external force so that it can be delivered to a predetermined position on the material charging table. Compared with the prior art in which the material charging trolley is directly used for material charging, the solution provided in this embodiment is more convenient to use and can avoid the phenomenon of collision caused by deviation of the center of gravity of the member-to-be-cut when it comes between the material charging port and the material charging table.

In the technical field of wire cutting apparatus in the prior art, the spray devices 52 installed in the cutting chamber mostly perform spraying directly through the spray pipe. Spraying by the spray pipe has problems of uneven spraying and the influence of spraying impact force on the cutting wire network.

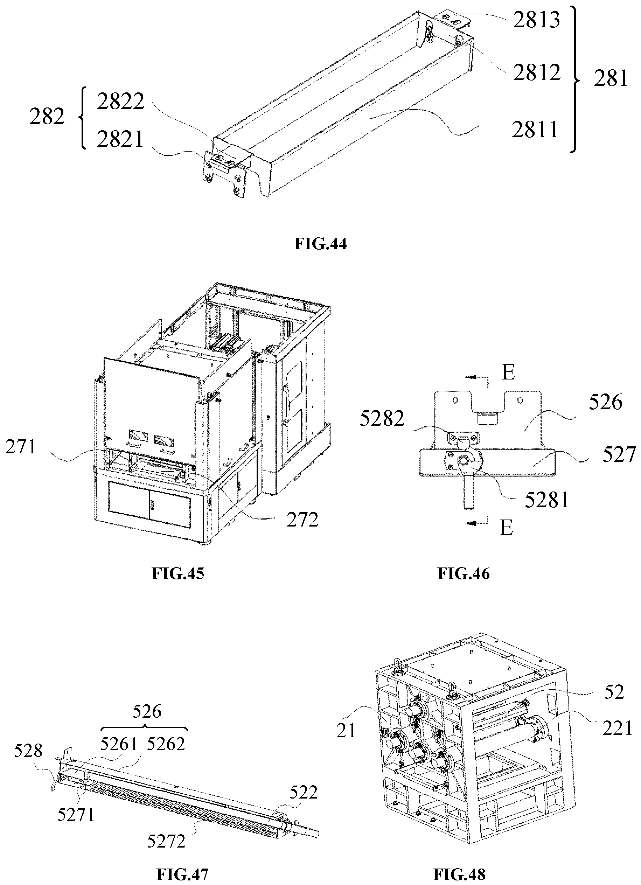

In view of this problem in the prior art, the embodiment of the present application provides a spray device 52. As shown in FIGS. 46 to 49, the spray device 52 includes a spray body 526, a spray pipe 522, and a drop box 527. The spray pipe 522 is arranged inside the spray body 526 and is located at an upper part of the spray body 526, bringing the cutting liquid from the circulation system to the cutting area. The drop box 527 is installed at a lower part of the spray body 526 in such a way that it can be detached by pulling, and at least one layer of drop tray 5272 is provided on the drop box 527. By providing the drop tray 5272, the cutting liquid sprayed from the spray pipe 522 can be evenly distributed and fall onto the cutting area. Due to the presence of a certain amount of cut powder in the cutting liquid in the circulation system, some cut powder will settle on the drop tray 5272 after long time of use. By providing the drop tray 5272 that can be detached by pulling, it is easy to pull out the drop box 527 for cleaning during shutdown.

For the drop box 527 arranged on the spray body 526 in such a way that it can be detached by pulling, in a preferred embodiment, the drop box 527 is fixed inside the spray body 526 through a spray locking mechanism 528, and the spray locking mechanism 528 is located at one end of the spray body 526 that is away from an inlet of the spray pipe 522, which corresponds to the side of the material charging port of the cutting apparatus, making it convenient to directly detach the drop box 527 by pulling. The spray locking mechanism 528 can keep the integrated arrangement of the drop box 527 and the spray body 526 during use, increasing the stability of the apparatus.

Specifically, the spray locking mechanism 528 includes a locking wrench 5281 and a spray limiting block 5282 that cooperate with each other. The locking wrench 5281 is rotatably arranged on the drop box 527 through a fixed shaft, and the spray limiting block 5282 is arranged on the spray body 526. The locking wrench 5281 includes a handle and a wrench plate that are integrated, with a fixed shaft hole located in the middle of the locking wrench 5281. Under the control of the handle, the wrench plate can rotate around the fixed shaft, thereby entering the gap between the spray limiting block 5282 and the spray body 526, ensuring the tightness of the connection between the drop box 527 and the spray body 526. In addition, by providing the handle, it is convenient to pull the drop box 527 out of the spray body 526 after the wrench plate is detached from the gap between the spray limiting block 5282 and the spray body 526.

The drop box 527 includes two independent and parallel layers of drop trays 5272, and all the drop trays 5272 are evenly provided with drop holes. Spray baffles 5271 are respectively arranged on the front and rear sides as well as the left and right sides of the drop trays 5272, preventing the cutting liquid from falling down all around the drop trays 5272 and also preventing the deposition of cut powder in limiting tracks on the spray body 526. The distribution area of the drop holes in the upper drop tray 5272 is smaller than that in the lower drop tray 5272. All the drop trays 5272 are detachably arranged on the bracket of the drop box 527. The drop box 527 is arranged on the spray body 526 through limiting tracks in such a way that it can be pulled, and the spray body 526 is provided with limiting tracks having a one-to-one correspondence to the drop trays.

A lower part of the spray pipe 522 is evenly provided with a row of spray holes that run through its length direction. In order to optimize the liquid outflow distribution of the spray pipe 522, in another embodiment, multiple rows of parallel spray holes are provided at the lower part of the spray pipe 522.

In this technical solution, the spray body 526 includes a spray support bracket 5261 and a spray protection plate 5262. The spray protection plate 5262 is detachably arranged on an upper surface of the spray support bracket 5261 to facilitate maintenance of the spray pipe 522. An upper part of the spray support bracket 5261 is arranged in a trapezoidal shape, which can reduce the spanning area of the upper part of the spray body 526, making it more convenient to avoid the cutting wire network. The drop box 527 is arranged at a lower part of the spray support bracket 5261, and sprays using a structure similar to a showerhead.

Regarding the application of the above spray device 52 in the cutting area assembly, the spray device 52 is installed on the cutting area frame 21 and located above the cutting station on the main cutting roller 221. Specifically, one end of the spray device 52 is connected to the cutting area frame 21 through the spray pipe 522, and the other end is fixed to the cutting area frame through the spray support bracket 5261.

Regarding the application of the above spray device and cutting area assembly in the cutting apparatus, for different application methods of the spray device in different cutting fields, in a magnetic material slicer which is fed below, the spray device is arranged inside the cutting wire network, and correspondingly arranged above the cutting wire network between two main cutting rollers. When in use, the cutting liquid can be directly applied to the position of the working cutting wire network. In addition, the spray device in the present application can also be used in a photovoltaic cutting machine apparatus. For the photovoltaic cutting apparatus, most of them feed the material from above, so the spray device is installed on one side of the feeding device to spray the cutting liquid in the cutting chamber, so that the cutting wire network can bring the cutting liquid into the cutting gap.

In the prior art, when using the cutting apparatus to slice the member-to-be-cut (such as magnetic materials), the member-to-be-cut is fixed on a bottom plate (marble slab, iron plate, or a combination of marble slab and iron plate), and then the bottom plate loaded with the member-to-be-cut is directly fixed on the platform. At this time, the member-to-be-cut is relatively fixed to the bottom plate, and the bottom plate is relatively fixed to the platform. The cutting apparatus can directly cut the member-to-be-cut. In order to ensure complete cutting of the member-to-be-cut, the cutting wire of the cutting apparatus needs to cut into the fixed marble slab and other structures on the bottom plate. When the bottom plate with existing slit is fixed with the member-to-be-cut again for cutting, the position of the slit on the bottom plate will not align with the cutting wire, which will affect the accuracy of this cutting. Similarly, when the wire of the cutting apparatus breaks during the cutting process, it is necessary to adjust the position of the member-to-be-cut to a certain extent to ensure the cutting accuracy.

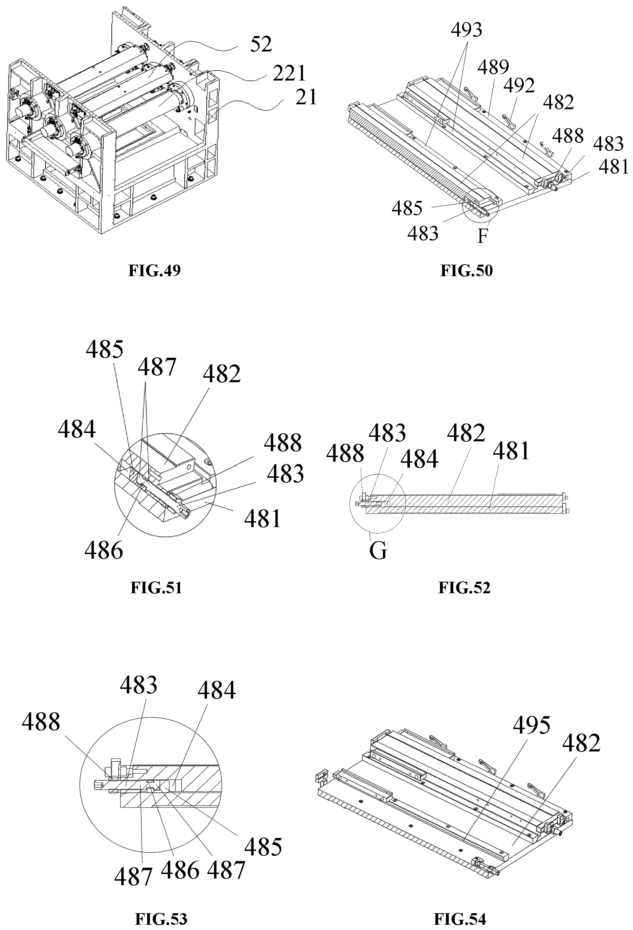

Therefore, this embodiment provides a working plate assembly for carrying the member-to-be-cut. The working plate assembly is another embodiment of the above-mentioned carrying platform 43. As shown in FIGS. 50 to 57, the working plate assembly includes a workpiece platform 481, a workpiece bottom plate 482 for installing the member-to-be-cut, and a locking mechanism. The workpiece bottom plate 482 is arranged on the workpiece platform 481 and can move on a surface of the workpiece platform 481.

The locking mechanism is arranged on the workpiece platform 481, and the locking mechanism can lock the workpiece bottom plate 482 to the workpiece platform 481. By making the workpiece bottom plate 482 movable relative to the workpiece platform 481, the position of the member-to-be-cut can be adjusted while keeping the workpiece platform 481 stationary, thereby meeting the requirements of the cutting apparatus for alignment of wire or slit and improving the cutting effect. At the same time, the locking mechanism is used to lock the workpiece bottom plate 482 after the adjustment of the workpiece bottom plate 482 is completed, avoiding displacement of the workpiece bottom plate 482 relative to the workpiece platform 481 during the slicing process.

The working plate assembly also includes an adjustment structure, which is arranged on the workpiece platform 481 and can drive the workpiece bottom plate 482 to move along the surface of the workpiece platform 481. By utilizing the adjustment structure, the difficulty of driving the workpiece bottom plate 482 to move can be reduced, while improving the moving accuracy of the workpiece bottom plate 482, thereby ensuring that the member-to-be-cut can move by a set distance and meeting the requirements for alignment of wire and slit.

Specifically, the adjustment structure includes a workpiece adjustment bolt 483, which is rotatably arranged on the workpiece bottom plate 482, and the workpiece bottom plate 482 is threaded with the workpiece adjustment bolt 483 to drive the workpiece bottom plate 482 to move through the rotation of the workpiece adjustment bolt 483. The thread pitch on the workpiece adjustment bolt 483 is determined, and the movement distance of the workpiece bottom plate 482 can be determined based on the number of turns of the rotation of the workpiece adjustment bolt 483, thereby making the movement size of the member-to-be-cut be accurate.

The workpiece bottom plate 482 is provided with a threaded hole, and the workpiece adjustment bolt 483 can be matched with the internal thread inside the threaded hole. Therefore, when the workpiece adjustment bolt 483 rotates, the internal thread of the threaded hole and the external thread of the workpiece adjustment bolt 483 can mesh with each other, thereby achieving movement between the workpiece adjustment bolt 483 and the workpiece bottom plate 482 along the axis direction of the workpiece adjustment bolt 483.

In order to ensure reliable relative movement between the workpiece bottom plate 482 and the workpiece platform 481, a workpiece slide slot 484 is provided on the workpiece bottom plate 482. The adjustment structure also includes a workpiece fixing block 485, which is arranged on the workpiece platform 481, and which is located in the workpiece slide slot 484. The workpiece slide slot 484 can move relative to the workpiece fixing block 485. The workpiece adjustment bolt 483 is rotatably arranged on the workpiece fixing block 485. The workpiece slide slot 484 is used to define the forward and backward movement space of the workpiece bottom plate 482.

At the same time, the workpiece fixing block 485 is provided with a via hole, and the workpiece adjusting bolt 483 is provided with a via hole mating section 486 of the workpiece and two thread sections 487 of the workpiece. The via hole mating section 486 of the workpiece is located between the two thread sections 487 of the workpiece, and the outer diameter of the via hole mating section 486 of the workpiece is smaller than that of the thread sections 487 of the workpiece. The via hole mating section 486 of the workpiece is arranged at the via hole, and the thread sections 487 of the workpiece can abut with the ends of the via hole to limit the via hole mating section 486 of the workpiece. The diameter of the via hole mating section 486 of the workpiece is smaller than the inner diameter of the via hole, ensuring that the via hole mating section 486 of the workpiece can rotate inside the via hole. The via hole is used to ensure that the workpiece adjustment bolt 483 can reliably rotate on the workpiece fixing block 485. At the same time, the thread sections 487 of the workpiece are used to limit the position of the via hole mating section 486 of the workpiece, so as to ensure that the workpiece adjustment bolt 483 remains stationary during the rotating process. Therefore, the workpiece bottom plate 482 can be driven to move by the thread fitting, ultimately achieving the movement of the workpiece bottom plate 482 relative to the workpiece platform 481.

When the workpiece adjustment bolt 483 rotates clockwise, the end face of the thread section 487 of the workpiece, located inside the workpiece fixing block 485, of the workpiece adjustment bolt 483, will be restricted by the workpiece fixing block 485; at this time, the workpiece bottom plate 482 will move backward. Similarly, when the workpiece adjustment bolt 483 rotates counterclockwise, the end face of the thread section 487 of the workpiece, located outside the workpiece fixing block 485, of the workpiece adjustment bolt 483, will be restricted by the workpiece fixing block 485; at this time, the workpiece bottom plate 482 will move forward, thereby achieving the movement of the workpiece bottom plate 482 relative to the workpiece platform 481.

Due to the rectangular structure of the member-to-be-cut, the cutting position is arranged in the length direction of the member-to-be-cut when slicing the member-to-be-cut. When adjusting the position of the member-to-be-cut, only the position in the length direction of the member-to-be-cut needs to be adjusted, and there is no need to adjust the position in the width direction of the member-to-be-cut. Therefore, the axis direction of the workpiece adjustment bolt 483 is parallel to the length direction of the workpiece bottom plate 482 to drive the workpiece bottom plate 482 to move in the length direction of the workpiece bottom plate 482. When the workpiece adjustment bolt 483 drives the workpiece bottom plate 482 to move, the workpiece bottom plate 482 can only move in the length direction of the member-to-be-cut, which can meet the requirements for alignment of wire and slit, and also avoid the problem of unreliable cutting of the member-to-be-cut caused by the movement of the workpiece bottom plate 482 in other directions.

The working plate assembly also includes a workpiece locking member 488, which can lock the workpiece adjustment bolt 483 to the workpiece bottom plate 482. The workpiece locking member 488 is used to lock the workpiece adjustment bolt 483, avoiding rotation of the workpiece adjustment bolt 483 and ensuring that the workpiece bottom plate 482 is locked and fixed relative to the workpiece platform 481. A locking mechanism is arranged on one side of the workpiece bottom plate 482 in the width direction, and the locking mechanism can abut against a side face of the workpiece bottom plate 482 in the width direction to lock the workpiece bottom plate 482. By using the locking mechanism to lock the width direction of the workpiece bottom plate 482, the width direction of the workpiece bottom plate 482 can be limited. At the same time, the contact friction between the locking mechanism and the workpiece bottom plate 482 can also be used to limit the movement of the workpiece bottom plate 482, thereby ensuring the relative fixation between the workpiece bottom plate 482 and the workpiece platform 481.

In an embodiment, a workpiece installation structure 489 is provided on the workpiece platform 481, and the workpiece installation structure 489 is located on one side of the workpiece bottom plate 482 in the width direction. A locking mechanism is movably arranged on the workpiece installation structure 489, and the locking mechanism has a locking state in which it abuts against the workpiece bottom plate 482 to lock the workpiece bottom plate 482 and a disengagement state in which it disengages from the workpiece bottom plate 482 to release the workpiece bottom plate 482. Using the workpiece installation structure 489 facilitates the arrangement of the locking mechanism, and at the same time, switching the state of the locking mechanism can achieve the fixation and release of the workpiece bottom plate 482. The locking mechanism includes a workpiece adjustment block 491 and a workpiece adjustment handle 492. The workpiece adjustment handle 492 is movably arranged on the workpiece installation structure 489, and the workpiece adjustment block 491 is connected to the workpiece adjustment handle 492. When the locking mechanism is in the locking state, the workpiece adjustment block 491 abuts against and mates with the workpiece bottom plate 482; and when the locking mechanism is in the disengagement state, there is a spacing between the workpiece adjustment block 491 and the workpiece bottom plate 482. The workpiece adjustment handle 492 is arranged on a side of the workpiece installation structure 489 that is away from the workpiece adjustment block 491, that is, the workpiece adjustment handle 492 can be directly operated from the outside of the workpiece platform 481 to drive the workpiece adjustment block 491 to move, thereby achieving the state switching of the locking mechanism. When adjusting the state of the locking mechanism, only the workpiece adjustment handle 492 needs to be adjusted (including but not limited to rotating the workpiece adjustment handle 492, pulling the workpiece adjustment handle 492, etc.), and the workpiece adjustment handle 492 can directly drive the workpiece adjustment block 491 to move.

Optionally, the locking mechanism also includes a reset mechanism, which is arranged on the workpiece installation structure 489 and which can drive the workpiece adjustment block 491 to move away from the workpiece bottom plate 482. The workpiece adjustment handle 492 can press the workpiece adjustment block 491 toward the workpiece bottom plate 482. When the workpiece bottom plate 482 needs to be released, the workpiece adjustment handle 492 is loosened. At this time, the reset mechanism pulls the workpiece adjustment block 491 toward the workpiece installation structure 489, thereby disengaging the workpiece adjustment block 491 from the workpiece bottom plate 482 and ensuring reliable movement of the workpiece bottom plate 482.

The workpiece installation structure 489 in the figure is provided with two countersink holes and a first threaded hole located between the two countersink holes. The workpiece adjustment block 491 is provided with a second threaded hole corresponding to the two countersink holes and a limiting slot corresponding to the first threaded hole. The workpiece adjustment handle 492 is provided with an external thread. A bolt is provided in the countersink hole, and the bolt passes through the countersink hole and is threaded with the second threaded hole to connect the workpiece adjustment block 491 with the workpiece installation structure 489. At the same time, the workpiece adjustment block 491 can move in the length direction of the bolt. At the same time, the reset mechanism is arranged in the countersink hole, with one end of the reset mechanism abutting against the bottom of the countersink hole and the other end abutting against a bolt head of the bolt. The workpiece adjustment handle 492 is rotatably arranged in the first threaded hole, and the end of the workpiece adjustment handle 492 that is close to the workpiece adjustment block 491 can extend into the limiting slot. When the workpiece adjustment handle 492 moves toward the interior of the workpiece installation structure 489, the workpiece adjustment handle 492 can extend into the limiting slot and press the workpiece adjustment block 491 so that the workpiece adjustment block 491 moves toward the workpiece bottom plate 482, thus realizing the fixing of the workpiece bottom plate 482. During this process, the bolt will move with the movement of the workpiece adjustment block 491, and the bolt head will press the reset mechanism, causing the reset mechanism to accumulate a reset force. When the workpiece adjustment handle 492 moves toward the outside of the workpiece installation structure 489, the pressure exerted by the workpiece adjustment handle 492 on the workpiece adjustment block 491 decreases or even becomes zero. At this time, the reset force accumulated by the reset mechanism begins to drive the workpiece adjustment block 491 to move toward the position of the workpiece installation structure 489, thereby causing the workpiece adjustment block 491 to disengage from the workpiece bottom plate 482 and allowing the workpiece bottom plate 482 to move. Preferably, the reset structure is a spring.

In order to ensure that the position of the workpiece bottom plate 482 on the workpiece platform 481 can be located at a set position, the working plate assembly also includes a workpiece limiting structure 493, which is arranged on the workpiece platform 481. The workpiece limiting structure 493 and the locking mechanism are respectively arranged on both sides of the workpiece bottom plate 482 in the width direction. The locking mechanism and the workpiece limiting structure 493 can jointly lock the workpiece bottom plate 482. The workpiece limiting structure 493 is fixedly arranged on the workpiece platform 481, and can limit a first side of the workpiece bottom plate 482 in the width direction. The locking mechanism can limit and fix a second side of the workpiece bottom plate 482 in the width direction, and at the same time, the positioning and limiting or disengaging of the workpiece bottom plate 482 in the width direction can be achieved by switching the state of the locking mechanism. Since the cutting position of the cutting apparatus and the width size of the workpiece bottom plate 482 are unchanged, the workpiece limiting structure 493 is used to ensure that the first side of the workpiece bottom plate 482 is in the preset position, and then the locking mechanism is used to press and limit the second side of the workpiece bottom plate 482, ensuring that the workpiece bottom plate 482 reaches the preset position in the width direction. At the same time, since the workpiece limiting structure 493 and the locking mechanism are arranged on both sides of the workpiece bottom plate 482, they can provide a certain degree of limiting for the movement of the workpiece bottom plate 482 in the length direction, ensuring the reliable movement of the workpiece bottom plate 482 and also avoiding interference between the workpiece limiting structure 493, the locking mechanism and the adjustment structure. The workpiece limiting structure 493 is a long strip-shaped structure that is equal in length to the workpiece bottom plate 482, and the number of the workpiece adjustment blocks 491 is at least two. All the workpiece adjustment blocks 491 are arranged side by side in the length direction of the workpiece bottom plate 482. Using multiple workpiece adjustment blocks 491 can increase the locking degree and limiting accuracy for the workpiece bottom plate 482, ensuring the cutting accuracy of the cutting apparatus.

**In** order to further ensure the reliable fixation between the workpiece bottom plate 482 and the workpiece platform 481, a first mating slope 494 of the workpiece is provided on a side face of the workpiece bottom plate 482 in the width direction, and a second mating slope 495 of the workpiece is provided on the workpiece adjustment block 491 and/or the workpiece limiting structure 493. The first mating slope 494 of the workpiece contacts and mates with the second mating slope 495 of the workpiece. By utilizing the surface contact between the first mating slope 494 of the workpiece and the second mating slope 495 of the workpiece, the degree of friction fit between the workpiece adjustment block 491 and the workpiece bottom plate 482 can be increased, and the positioning accuracy for the workpiece bottom plate 482 can also be improved.

Preferably, the second mating slope 495 of the workpiece faces the workpiece platform 481 so that the second mating slope 495 of the workpiece can press the workpiece bottom plate 482 in a direction toward the workpiece platform 481. The component forces of the pressing force generated on the workpiece bottom plate 482 by the second mating slope 495 of the workpiece include a horizontal component force and a vertically downward component force. The vertically downward component force can press the workpiece bottom plate 482 toward the workpiece platform 481, thereby increasing the friction between the workpiece bottom plate 482 and the workpiece platform 481 and avoiding relative displacement between the workpiece bottom plate 482 and the workpiece platform 481. As shown in the figure, the second mating slope 495 of the workpiece is formed on a part of the workpiece limiting structure 493 that faces the workpiece bottom plate 482, and the second mating slope 495 of the workpiece is also formed on a part of the workpiece adjustment block 491 that faces the workpiece bottom plate 482. The first mating slope 494 of the workpiece is formed on both a part of the workpiece bottom plate 482 that faces the workpiece limiting structure 493 and a part of the workpiece bottom plate 482 that faces the workpiece adjustment block 491, and the first mating slope 494 of the workpiece can correspondingly mate with the corresponding second mating slope 495 of the workpiece. The workpiece installation structure 489 and the workpiece platform 481 jointly form a U-shaped slot, and the workpiece adjustment block 491 can retract into or protrude from the U-shaped slot. When the first mating slope 494 of the workpiece mates with the second mating slope 495 of the workpiece, the interaction force between the two will make the workpiece adjustment block 491 move away from the workpiece platform 481, At this point, the upper surface of the U-shaped slot will restrict the workpiece adjustment block 491 from moving vertically, thereby ensuring the pressing effect of the workpiece adjustment block 491 on the workpiece bottom plate 482.

A workpiece limiting block 496 is arranged on the workpiece bottom plate 482, and the workpiece limiting block 496 can fix and limit the workpiece on the workpiece bottom plate 482. Specifically, a workpiece plate assembly is provided on the workpiece bottom plate 482, and the member-to-be-cut is arranged on the workpiece plate assembly. The workpiece limiting block 496 can limit the workpiece plate assembly on the workpiece bottom plate 482.

There are three forms of the workpiece plate assembly. In the first form, the member-to-be-cut is sticked onto a marble slab, which is placed on the workpiece bottom plate 482; the marble slab is positioned by two workpiece limiting blocks 496 in the width direction and three workpiece limiting blocks 496 in the length direction (front-and-rear direction) of the workpiece bottom plate 482. In the second form, the member-to-be-cut is sticked onto a marble slab, which is sticked onto a metal pallet placed on the workpiece bottom plate 482; the metal pallet is positioned by two workpiece limiting blocks 496 in the width direction and three workpiece limiting blocks 496 in the length direction (front-and-rear direction) of the workpiece bottom plate 482. In the third form, the member-to-be-cut is sticked onto a marble slab, which is placed on a metal pallet for limiting the marble slab; the metal pallet is limited by two workpiece limiting blocks 496 in the width direction and three workpiece limiting blocks 496 in the length direction (front-and-rear direction) of the workpiece bottom plate 482. At least two limiting blocks are arranged in the width direction of the workpiece bottom plate 482, and at least three limiting blocks are arranged in the length direction of the workpiece bottom plate 482, thereby achieving multi-point limiting, improving the limiting effect, and also increasing the positioning accuracy.

The workpiece limiting block 496 is provided with a workpiece drainage slot 497, which is communicated with the connection position between the workpiece bottom plate 482 and the member-to-be-cut. By using the workpiece drainage slot 497, the cutting liquid or impurities flowing to the contact position between the workpiece limiting block 496 and the workpiece bottom plate 482 as well as the contact position between the workpiece limiting block 496 and the member-to-be-cut or the marble slab provided with the member-to-be-cut can be discharged, ensuring the limiting effect of the workpiece limiting block 496.

The working plate assembly is arranged on the feeding device, which drives the working plate assembly to rise and fall so that the member-to-be-cut is driven to move, thus achieving slicing of the member-to-be-cut.

In the prior art, for a slicing apparatus that slices the member-to-be-cut (such as magnetic materials), a feeding device is used to drive the member-to-be-cut and the like to move toward the cutting wire network for slicing. Therefore, precise positioning of the feeding device is required to ensure the accuracy of slicing. However, the cutting chamber and the winding chamber on the pedestal of the slicing apparatus are formed by integral casting, and the position of the feeding device is located inside the pedestal with a large distance from the edge of the pedestal. The frame structure on the pedestal will affect the machining of the pedestal by the machining apparatus; in particular, the maximum size between the feeding pedestal and the pedestal frame is much larger than the machining size of the boring machine in the prior art, so it is impossible to use the boring machine to machine the pedestal assembly, which makes it impossible to directly form a positioning boss on the pedestal assembly. Without the positioning boss, the positioning accuracy of the feeding pedestal will be reduced, and the low positioning accuracy of the feeding base will make the member-to-be-cut unable to be reliably raised and lowered, resulting in a decrease in the slicing accuracy of the member-to-be-cut and the problem of unreliable cutting of the member-to-be-cut.

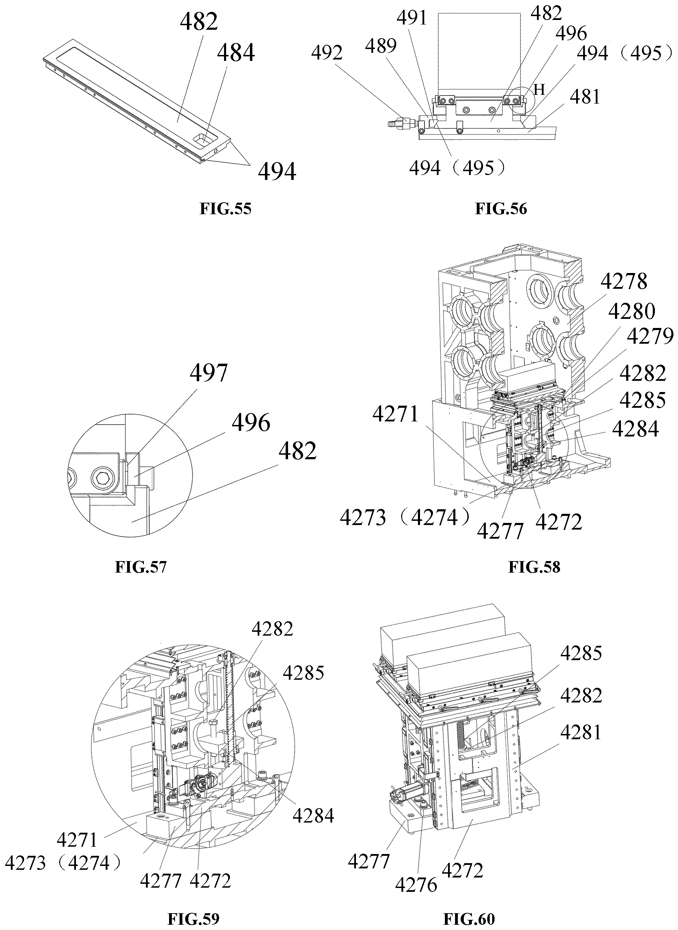

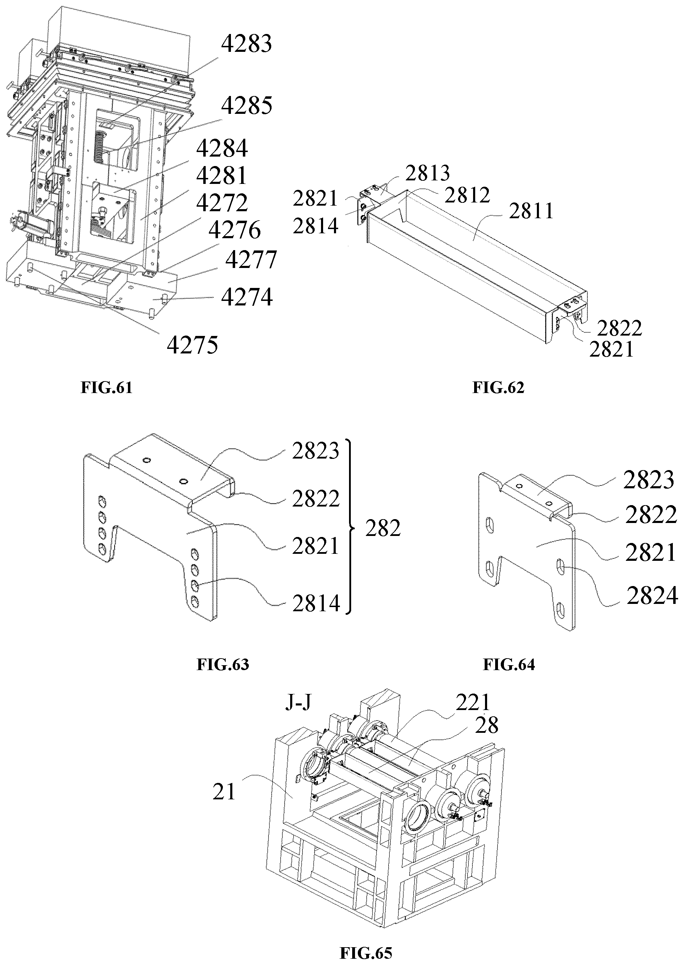

Therefore, the present application provides a feeding device 4, as shown in FIGS. 58 to 61. The feeding device 4 includes a feeding pedestal assembly 4271, a feeding pedestal 4272, and a positioning mechanism. The feeding pedestal 4272 is arranged on the feeding pedestal assembly 4271.

The positioning structure is arranged between the feeding pedestal 4272 and the feeding pedestal assembly 4271, and positioning fit is formed between the positioning structure and the feeding pedestal 4272. By utilizing the positioning structure to form two-stage positioning fit with the feeding pedestal 4272 and the feeding pedestal assembly 4271, the positioning accuracy of the feeding pedestal 4272 is ensured, thereby effectively ensuring the cutting effect.

In an embodiment, a first positioning platform 4273 for feeding is formed on the feeding pedestal assembly 4271, and a positioning surface 4274 for feeding is provided on the positioning structure. The positioning surface 4274 for feeding is set in contact with first positioning platform 4273 for feeding to ensure accurate positioning of the feeding pedestal assembly 4271 and the positioning structure, facilitating the machining of the feeding pedestal assembly 4271. At the same time, the surface accuracy of the first positioning platform 4273 for feeding and the surface accuracy of the positioning surface 4274 for feeding are used to ensure accurate positioning of the positioning structure and the feeding pedestal assembly 4271. That is, when machining the feeding pedestal assembly 4271, a milling machine or other machines can be used for directly machining on the feeding pedestal assembly 4271. It is only required to machine the first positioning platform 4273 for feeding on the feeding pedestal assembly 4271 to achieve the positioning of the feeding pedestal 4272, reducing the difficulty of machining the feeding pedestal assembly 4271 and ensuring the cutting accuracy of the slicer.

In order to avoid relative movement between the feeding pedestal assembly 4271 and the positioning structure, a first fitting structure is provided on the first positioning platform 4273 for feeding, and a second fitting structure is provided on the positioning surface 4274 for feeding. The first fitting structure and the second fitting structure cooperate to achieve the positioning fit between the first positioning platform 4273 for feeding and the positioning surface 4274 for feeding. By utilizing the first fitting structure and the second fitting structure to restrict the relative movement between the positioning structure and the feeding pedestal assembly 4271 in the horizontal direction, precise positioning of the positioning structure and the feeding pedestal assembly 4271 can be achieved.

Specifically, the first positioning platform 4273 for feeding is provided with an installation hole, which forms the first fitting structure. The positioning surface 4274 for feeding is provided with an installation column 4275 for feeding, which forms the second fitting structure. The installation column 4275 for feeding can be arranged in the installation hole. The installation column 4275 for feeding extends into the installation hole to restrict the relative movement of the positioning structure and the feeding pedestal assembly 4271 in the horizontal direction. At the same time, the installation hole and the installation column 4275 for feeding are also convenient to machine, reducing the difficulty of machining the feeding pedestal assembly 4271.

Optionally, the inner diameter of the installation hole is equal to the diameter of the installation column 4275 for feeding, which improves the fitting accuracy between the installation hole and the installation column 4275 for feeding, and further improves the fitting accuracy between the positioning structure and the feeding pedestal assembly 4271. The first positioning platform 4273 for feeding is also provided with a through hole, and the positioning surface 4274 for feeding is provided with a threaded hole. A bolt can pass through the through hole and can be threaded with the threaded hole to achieve locking between the feeding pedestal assembly 4271 and the positioning structure, ensuring reliable fixation of the feeding pedestal assembly 4271 and the positioning structure.

In order to facilitate the positioning of the feeding pedestal 4272, a positioning boss 4276 for feeding is provided on the positioning structure, and the feeding pedestal 4272 is positioned and matched with the positioning boss 4276 for feeding. Due to the independent structure of the positioning structure, it has a small volume and can be placed on various machining apparatuses for machining. That is, the positioning boss 4276 for feeding is arranged on the positioning structure for facilitating machining. At the same time, it can also achieve the effect of positioning the feeding pedestal 4272 using the positioning boss 4276 for feeding in the prior art, ensuring the positioning effect of the feeding pedestal 4272.

When cutting the member-to-be-cut, the cutting wire will apply a pressing force to the member-to-be-cut, which will be transmitted to the feeding pedestal 4272 and cause it to tilt. Therefore, the positioning structure in the present application includes two positioning blocks 4277 for feeding, which are symmetrically arranged on both sides of the feeding pedestal 4272 in the length direction of the member-to-be-cut. Using two positioning blocks 4277 for feeding ensures the positioning accuracy of the feeding pedestal 4272, and reduces the volume of the positioning blocks 4277 for feeding, thereby reducing the mass of the feeding device, facilitating the movement and disassembly of the feeding device, and also avoiding the problem of the feeding pedestal 4272 tilting during the cutting process, so that the cutting effect is ensured.

Each of the positioning blocks 4277 for feeding is formed with the positioning surface 4274 for feeding and the positioning boss 4276 for feeding, and the first positioning platforms 4273 for feeding are also formed on the feeding pedestal assembly 4271 respectively to match the two positioning blocks 4277 for feeding, further ensuring the positioning accuracy of the feeding pedestal 4272 and improving the cutting accuracy. At the same time, each of the positioning blocks 4277 for feeding is also formed with the installation column 4275 for feeding to match the installation hole on the corresponding first positioning platform 4273 for feeding for installation, ensuring the reliable positioning and reliable fixation of each positioning block 4277 for feeding.

In order to further improve the fixing effect of the feeding pedestal 4272, the feeding device also includes an upper frame 4278 for feeding, which is arranged on the feeding pedestal assembly 4271, and which encloses the cutting chamber together with the feeding pedestal assembly 4271. The feeding pedestal 4272 is fixed to the upper frame 4278 for feeding. The upper frame 4278 for feeding is fixed to the feeding pedestal assembly 4271, and the feeding pedestal 4272 is also fixed to the upper frame 4278 for feeding.

Specifically, the feeding device also includes a fixing block 4280 for feeding. A material inlet hole 4279 for feeding is provided on a bottom surface of the upper frame 4278 for feeding, and the fixing block 4280 for feeding is provided on the feeding pedestal 4272, with the fixing block 4280 for feeding fixed to the edge of the material inlet hole 4279 for feeding. The use of the fixing block 4280 for feeding facilitates the connection between the feeding pedestal 4272 and the upper frame 4278 for feeding, ensuring the reliable fixation of the feeding pedestal 4272 and the upper frame 4278 for feeding. As shown in the figure, one end of the fixing block 4280 for feeding is arranged on the feeding pedestal 4272, and the other end is arranged above the edge of the material inlet hole 4279 for feeding. At this time, the fixing block 4280 for feeding can ensure the fixing effect of the feeding pedestal 4272 and the upper frame 4278 for feeding. At the same time, when the feeding assembly drives the member-to-be-cut to move toward the cutting wire network, the reaction force of the cutting wire network directly acts on the feeding pedestal 4272. At this time, the fixing block 4280 for feeding can transmit the reaction force to the upper frame 4278 for feeding, reducing the force on the feeding pedestal 4272. That is, the fixing block 4280 for feeding can provide a certain degree of support for the feeding pedestal 4272, thereby further improving the reliable fixation of the feeding pedestal 4272.

The feeding device also includes a slide plate box 4281 for feeding and a feeding drive structure. The slide plate box 4281 for feeding is movably arranged on the feeding pedestal 4272; the feeding drive structure is arranged on the feeding pedestal 4272, and the feeding drive structure can drive the feeding pedestal 4272 to move. The feeding drive structure drives the slide plate box 4281 for feeding to move to achieve the rising and falling of the member-to-be-cut. When users fix the member-to-be-cut, an installation structure that uses both marble slab and iron plate as well as an installation structure that only uses marble slab both exist; there is a size difference in the lifting stroke of the slide plate box 4281 for feeding between the two installation structures. Therefore, in order to ensure that the feeding device can adapt to different installation structures of users, the slide plate box 4281 for feeding is provided with a first limiting structure 4282 for feeding, and the feeding pedestal 4272 is provided with a second limiting structure 4283 for feeding. The first limiting structure 4282 for feeding and the second limiting structure 4283 for feeding limit and match with each other to limit the stroke of the slide plate box 4281 for feeding. The spacing between the first limiting structure 4282 for feeding and the second limiting structure 4283 for feeding can be adjusted. The spacing between the first limiting structure 4282 for feeding and the second limiting structure 4283 for feeding is used to limit the movement distance of the slide plate box 4281 for feeding, thereby limiting the lifting distance of the member-to-be-cut and ensuring reliable cutting of the member-to-be-cut. When the member-to-be-cut is fixed on the iron plate through the marble slab, the spacing between the first limiting structure 4282 for feeding and the second limiting structure 4283 for feeding is increased, thereby increasing the stroke of the slide plate box 4281 for feeding and ensuring that the member-to-be-cut is cut through. When the member-to-be-cut is only sticked to the marble slab, the spacing between the first limiting structure 4282 for feeding and the second limiting structure 4283 for feeding is reduced, thereby reducing the stroke of the slide plate box 4281 for feeding, preventing the cutting wire network from cutting the slide plate box 4281 for feeding and other related structures, and ensuring the reliable operation of the feeding device.

Specifically, the feeding drive structure includes a feeding slider 4284 and a feeding lead screw 4285. The feeding lead screw 4285 is rotatably arranged on the feeding pedestal 4272, and the feeding slider 4284 is movable arranged on the feeding lead screw 4285. The slide plate box 4281 for feeding is connected to the feeding slider 4284, and the first limiting structure 4282 for feeding is movably arranged on the feeding slider 4284 to adjust the spacing between the first limiting structure 4282 for feeding and the second limiting structure 4283 for feeding. The rotation of the feeding lead screw 4285 drives the feeding slider 4284 to move up and down, thereby achieving the rising and falling of the slide plate box 4281 for feeding. At the same time, it facilitates the arrangement of the first limiting structure 4282 for feeding, avoiding changes to the structure of the slide plate box 4281 for feeding and reducing the machining difficulty of the feeding device.

The first limiting structure 4282 for feeding includes a limiting bolt, and a threaded hole is provided on the feeding slider 4284. The limiting bolt is rotatably arranged inside the threaded hole. By rotating the limiting bolt, the spacing between the first limiting structure 4282 for feeding and the second limiting structure 4283 for feeding can be adjusted, and the operation is convenient. A limiting platform is machined on the feeding pedestal 4272 located above the feeding slider 4284. The limiting platform forms the second limiting structure 4283 for feeding. As the slide plate box 4281 for feeding gradually rises, the end of the limiting bolt will abut against the second limiting structure 4283 for feeding. At this point, the slide plate box 4281 for feeding reaches its maximum stroke. One end of the limiting bolt is located on the upper side of the feeding slider 4284 for abutting against the second limiting structure 4283 for feeding, while the other end of the limiting bolt is located on the lower side of the feeding slider 4284 and can be locked by using a locking nut, thus ensuring the fixation of the limiting bolt on the feeding slider 4284 and further ensuring reliable stroke adjustment of the slide plate box 4281 for feeding.

By installing the cutting device below the cutting area frame, the center of gravity of the cutting apparatus is made lower, and the vibration during cutting is smaller, so that the stability of the cutting apparatus is increased during feeding, and the cutting accuracy can also be improved. This embodiment provides a material blocking box, which can adapt to the cutting method of feeding from bottom to top and protect the cut material from being damaged.

As shown in FIGS. 36, 44, and 62 to 65, this embodiment provides a specific explanation of the implementation of the above-mentioned material blocking box 28. The material blocking box 28 includes a material blocking frame 281 and fixing brackets 282 for material blocking. The fixing brackets 282 for material blocking are arranged at front and rear ends of the material blocking frame 281 respectively, and they can be used to fix the material blocking frame 281 on the cutting area frame 21 between the main cutting rollers 221.

In an embodiment, the material blocking frame 281 includes two first material blocking plates 2811 arranged in the left-and-right direction, and the first material blocking plates 2811 are connected to the fixing brackets 282 for material blocking. The two first material blocking plates 2811 can be provided separately or integrally. When provided separately, they are fixed in preset positions respectively by the fixing brackets 282 for material blocking. When provided integrally, connecting rods or other structures can be arranged between the two first material blocking plates 2811 to achieve the integrated connection of the two material blocking plates.

In another embodiment, the material blocking frame 281 also includes two second material blocking plates 2812 arranged in the front-and-rear direction. The two first material blocking plates 2811 are connected at both ends in the length direction by the two second material blocking plates 2812 respectively, that is, the two first material blocking plates 2811 and the two second material blocking plates 2812 enclose a square frame, forming a space for accommodating the member-to-be-cut. The top and bottom surfaces of the frame are open, which can respectively meet the requirements of spraying the cutting liquid from the upper drop box and feeding the member-to-be-cut by the lower feeding device. Preferably, the fixing brackets 282 for material blocking are arranged on the second material blocking plates 2812.

In order to increase the stability of the material blocking box during use and the convenience of installation, installation plates 2813 for material blocking extend from the two second material blocking plates 2812 respectively in the length direction on a side away from the material blocking frame 281. The fixing brackets 282 for material blocking are fixed on the installation plates 2813 for material blocking. Due to the small space between the two main cutting rollers 221 in the cutting chamber, through this design, the fixing brackets 282 for material blocking can be first installed onto the cutting area frame 21, and then the material blocking frame 281 is directly placed in the appropriate position on the fixing brackets 282 for material blocking. Installation hole 2824 for material blocking on the installation plates 2813 for material blocking can be used to fix the fixing brackets 282 for material blocking with bolts, making the operation more convenient and providing sufficient operating space during installation. In addition, in order to increase the stability of the material blocking frame 281 during use, support plates 2814 for material blocking are also provided between the installation plates 2813 for material blocking and the second material blocking plates 2812, which can increase the stability of the connection between the installation plates 2813 for material blocking and the material blocking frame 281.

On the basis of the above embodiments, in a preferred embodiment of this technical solution, two first material blocking plates 2811 are symmetrically arranged in the left-and-right direction, and the upper and lower parts of the first material blocking plates 2811 are inclined away from the center of the material blocking frame 281 respectively. This design can increase the opening area of the upper and lower parts of the material blocking frame 281, and can fully utilize the space according to the circular shape characteristic of the main cutting rollers. The side projection view of the first material blocking plate 2811 can be set as a circular arc shape in an alternative embodiment.

The fixing bracket 282 for material blocking includes a connection plate 2823 for material blocking and a fixing plate 2821 for material blocking, which are integrated. The connection plate 2823 for material blocking is horizontally arranged and parallel to the installation plate 2813 for material blocking, and the fixing plate 2821 for material blocking is vertically arranged. The fixing plate 2821 for material blocking and the connection plate 2823 for material blocking are respectively provided with installation holes 2824 for material blocking. The installation hole 2824 for material blocking on the connection plate 2823 for material blocking corresponds to the installation hole 2824 for material blocking on the installation plate 2813 for material blocking of the material blocking frame 281, so as to achieve the fixation of the fixing bracket 282 for material blocking and the material blocking frame 281. The installation hole 2824 for material blocking on the fixing plate 2821 for material blocking is fixed on the inner wall of the cutting area frame 21 or installed on the bearing box of the main cutting roller, or installed on the flange of the bearing box, thus indirectly achieving the fixation of the material body. The horizontally arranged connection plate 2823 for material blocking can facilitate the fixation of the material blocking frame 281.

In an embodiment, the installation hole 2824 for material blocking is a vertical long strip-shaped hole, and the height of the fixing bracket 282 for material blocking can be adjusted as needed to control the position of the material blocking frame 281. In an alternative technical solution, multiple alternative installation holes 2824 for material blocking can be provided on the fixing plates 2821 for material blocking or the connection plates 2823 for material blocking, and appropriate installation holes 2824 for material blocking are chosen according to the needs.

In addition, on the other side of the connection plate 2823 for material blocking, a limiting plate 2822 for material blocking is also provided, which is parallel to the fixing plate 2821 for material blocking. Since the material blocking box in this embodiment is installed on the inner wall of the cutting area frame 21 between the main cutting rollers 221, the limiting plate 2822 for material blocking is designed to ensure the position of the center of gravity of the connection plate 2823 for material blocking between two main cutting rollers 221 during installation. During installation, the limiting plate 2822 for material blocking can be just clamped at the position between the installation hole walls of the bearing boxes of two main cutting rollers. In addition, due to the weight of the material blocking frame 281, the connection plate 2823 for material blocking is prevented from being deformed under stress. The limiting plate 2822 for material blocking can directly make surface contact with the inner wall of the cutting area frame 21 to form abutment, and in cooperation with the vertical fixation of the fixing plate 2821 for material blocking, the stability of the connection plate 2823 for material blocking can be better ensured.

The above-mentioned material blocking box 28 is applied in the cutting area assembly 2. The material blocking box 28 is fixed on the cutting area frame 21 through the fixing bracket 282 for material blocking, and is located between two main cutting rollers 221. The feeding device 4 is located below the material blocking box 28, the drop box is located above the material blocking box 28, and the fixing bracket 282 for material blocking is installed on the end face of the installation hole wall of the bearing box.

## Claims

1. A cutting apparatus, comprising a cutting area assembly and a winding area assembly; wherein the cutting area assembly comprises a cutting area frame, an upper part of which is provided with a cutting device, and a lower part of which is provided with a feeding device used to support a member-to-be-cut and drive it to move upward so that the member-to-be-cut is cut by the cutting device;
the cutting device comprises an upper cutting roller group and a lower cutting roller group arranged in an up-and-down direction; the lower cutting roller group comprises at least two main cutting rollers, which are arranged in parallel and spaced apart from each other, and a space is left between two adjacent main cutting rollers for the member-to-be-cut to pass through; the upper cutting roller group comprises at least one main cutting roller, which is parallel to the main cutting rollers in the lower cutting roller group; and a cutting wire is wound around each of the main cutting rollers to form a cutting wire network; and
the winding area assembly is used to provide power for unwinding and winding the cutting wire, and guide the cutting wire from the winding area assembly to the main cutting rollers.

2. The cutting apparatus according to claim 1, further comprising a liquid circuit cooling system which comprises:
a liquid supply tank, which is provided with an accommodation cavity for accommodating a cutting liquid; and
a spray device, which is arranged above the lower cutting roller group, and which is connected to the liquid supply tank through a pipeline to spray the cutting liquid onto the cutting wire network for cooling.

3. The cutting apparatus according to claim 1, wherein two reversing devices are arranged on the outer side of the cutting device in the up-and-down direction; the height of one of the reversing devices is set between the upper cutting roller group and the lower cutting roller group, and the other of the reversing devices is lower than the lower cutting roller group; the cutting wire extends from the winding area assembly to one reversing device, is wound around each of the main cutting rollers to form a wire network, and then passes through the other reversing device before being recycled to the winding area assembly; and the reversing devices are fixed on the cutting area frame.

4. The cutting apparatus according to claim 3, wherein the winding area assembly comprises a winding area frame, and two winding groups arranged on the winding area frame in the up-and-down direction;
the winding group comprises:
a winding/unwinding device used to store the cutting wire;
a wiring device, which is arranged above the winding/unwinding device, and which is used to guide the cutting wire to be wound around or unwound from the winding/unwinding device in sequence in an axial direction of the winding/unwinding device; and
a tension device, which is arranged above the wiring device to adjust the tension of the cutting wire, wherein the cutting wire extends from the tension device to the reversing device.

5. The cutting apparatus according to claim 1, wherein the lower cutting roller group comprises three main cutting rollers, the upper cutting roller group comprises one main cutting roller, and the four main cutting rollers are arranged in a triangle.

6. The cutting apparatus according to claim 1, wherein the feeding device comprises:
a feeding base;
a feeding movement assembly, which is slidably arranged on the outer side of the feeding base, and can move relative to the feeding base;
a carrying platform, which is used to carry the member-to-be-cut, and is arranged at one end of the feeding movement assembly that faces the member-to-be-cut; and
a feeding drive mechanism, which is used to provide a movement driving force to the feeding movement assembly.

7. The cutting apparatus according to claim 6, wherein the feeding movement assembly comprises:
two sets of slide plate boxes, which are symmetrically arranged on the outer side of the feeding base; wherein the slide plate boxes are slidably connected to the feeding base through a guide mechanism, and the carrying platform is arranged at top ends of the two sets of slide plate boxes.

8. The cutting apparatus according to claim 7, wherein the feeding movement assembly moves vertically relative to the feeding base, and the carrying platform is arranged at the top of the feeding movement assembly.

9. The cutting apparatus according to claim 8, wherein the guide mechanism comprises:
a guide slider, which is fixed to an outer side surface of the feeding base and has a guide slot extending vertically; and
a guide rail, which is fixed to an inner side surface of the slide plate box that faces the feeding base, extends vertically and is slidably embedded in the guide slot.

10. The cutting apparatus according to claim 6, wherein the feeding base has an accommodation space inside it, and the feeding drive mechanism is arranged in the accommodation space;
the feeding drive mechanism comprises:
a feeding motor, which is fixed to the feeding base;
a reducer, which is connected to an output end of the feeding motor;
a lead screw, which extends vertically, and a bottom end of which is connected to an output end of the reducer; and
a lifting pallet, which is threaded with the lead screw, and which is connected to the two sets of slide plate boxes respectively.

11. The cutting apparatus according to claim 6, wherein the carrying platform comprises:
a carrying bottom plate;
a loading table for carrying the member-to-be-cut, which is arranged on a top surface of the carrying bottom plate, which can move in a first direction relative to the carrying bottom plate;
a first limiting assembly, which is located at both ends of the loading table in a second direction to restrict the loading table from moving in the second direction, the second direction being perpendicular to the first direction; and
a displacement adjustment assembly, which is arranged at the end of the carrying bottom plate in the first direction, and which is used to adjust the displacement of the loading table in the first direction.

12. The cutting apparatus according to claim 11, wherein the carrying platform further comprises:
a second limiting assembly, which is arranged at both ends of the loading table in the first direction respectively for restricting the member-to-be-cut from moving relative to the loading table in the first direction.

13. The cutting apparatus according to claim 12, wherein the carrying platform further comprises:
a third limiting assembly, which is arranged on both sides of the loading table in the second direction respectively; wherein the top of the third limiting assembly is higher than the loading table, and is used to restrict the member-to-be-cut from moving in the second direction.

14. The cutting apparatus according to claim 11, wherein the first limiting assembly comprises:
a limiting strip, which extends in the first direction and is arranged on one side of the loading table; and
a fixing strip, which extends in the first direction and is arranged on the other side of the loading table, wherein the fixing strip and the limiting strip define a space for accommodating the loading table.

15. The cutting apparatus according to claim 14, wherein the loading table has a loading table body with a rectangular cross section, and the bottom of the loading table body extends outward in the second direction to form an extension part; end faces of the extension part that face the fixing strip and the limiting strip are slopes;
the fixing strip has a fixing support part extending in a direction perpendicular to the carrying bottom plate, and the top of the fixing support part extends toward the loading table in the second direction to form a limiting part, which is used to abut against the extension part of the loading table; and
the limiting strip has a limiting support part extending in the direction perpendicular to the carrying bottom plate, and the top of the limiting support part extends toward the loading table in the second direction to form a guide part; a guide slope transitions between the guide part and the limiting support part, and the guide slope is used to abut against the slope of the extension part of the loading table.

16. The cutting apparatus according to claim 14 or 15, wherein the first limiting assembly further comprises:
a locking mechanism, which is arranged on the fixing strip, and which is used to apply a force to the loading table in the second direction to press the loading table tightly against the limiting strip.

17. The cutting apparatus according to claim 16, wherein the locking mechanism comprises:
a locking block, which is located between the fixing strip and the loading table;
a locking bolt, which is screwed into a threaded hole of the fixing strip in the second direction, and a tail end of which is pressed against the locking block; wherein a nut is sleeved on the locking bolt, and the nut is located between the head of the locking bolt and the fixing strip;
a locking screw, which is threaded along the second direction into a stepped hole of the fixing strip, and a tail end of which is screwed into a threaded hole of the locking block; and
a locking spring, which is sleeved onto the locking screw, and which is limited within the stepped hole by the head of the locking screw.

18. The cutting apparatus according to claim 12, wherein the second limiting assembly comprises:
a pressing block, which is arranged on an end face of the loading table that is away from the displacement adjustment assembly in the first direction, and the top of which is higher than the loading table and is used to abut against the end face of the member-to-be-cut; and
a limiting plate, which is arranged on the end face of the loading table that is close to the displacement adjustment assembly in the first direction, and the top of which is higher than the loading table and is used to abut against the end face of the member-to-be-cut.

19. The cutting apparatus according to claim 13, wherein the third limiting assembly comprises:
two limiting blocks symmetrically arranged on both sides of the loading table in the second direction; wherein the limiting block has a bottom support extending in the second direction, and an end of the bottom support is fixed to a side face of the loading table; an end of the bottom support that is away from the loading table extends upward to form a limit stop, and a top end of the limit stop is higher than the loading table and used to abut against a side face of the member-to-be-cut.

20. The cutting apparatus according to claim 11, wherein the displacement adjustment assembly comprises:
an adjustment plate, which is arranged on an end face of the carrying bottom plate in the first direction, and a top end of which is higher than the carrying bottom plate and stops at the end of the loading table; and
a first adjustment screw, which is screwed into a threaded hole of the adjustment plate in the first direction, and a tail of which is used to abut against the loading table.

21. The cutting apparatus according to claim 20, wherein the displacement adjustment assembly further comprises:
an adjustment block, which is arranged on the top surface of the carrying bottom plate and is located at the end of the carrying bottom plate that is away from the adjustment plate; and
a second adjustment screw, which is screwed into a threaded hole of the adjustment block in the first direction, and a tail of which is used to abut against the loading table.

22. The cutting apparatus according to claim 11, wherein there are two loading tables, which are arranged side by side on the top surface of the carrying bottom plate; each of the loading tables is provided with the displacement adjustment assembly at the end in the first direction, and provided with the first limiting assembly at the ends in the second direction.

23. The cutting apparatus according to claim 3, wherein the reversing device comprises:
a guide rod, which is parallel to the main cutting rollers and fixed to the cutting area frame;
a slide seat, which is connected to the guide rod, and which can slide in the length direction of the guide rod and can be locked after sliding in place; and
a reversing wheel assembly, which can swing toward and away from the guide rod and can be locked after swinging in place.

24. The cutting apparatus according to claim 23, wherein the slide seat comprises:
an upper slider of the slide seat, which sits on the guide rod;
a lower slider of the slide seat, which is connected below the upper slider of the slide seat, wherein there is a gap between the lower slider of the slide seat and the guide rod; and
a locking screw of the slide seat, which passes through the lower slider of the slide seat, and enters the gap between the lower slider of the slide seat and the guide rod to lock the slide seat.

25. The cutting apparatus according to claim 24, wherein the upper slider of the slide seat has an upper slider notch of the slide seat, which is opened downward; and the upper slider of the slide seat sits on the guide rod through the upper slider notch of the slide seat;
the lower slider of the slide seat has a lower slider notch of the slide seat, which is opened upward; the lower slider of the slide seat is connected below the upper slider of the slide seat with the lower slider notch of the slide seat facing upward, and there is a gap between a bottom wall of the lower slider notch of the slide seat and the guide rod; and
the locking screw of the slide seat passes through the lower slider notch of the slide seat from the bottom of the lower slider of the slide seat, and enters the gap between the bottom wall of the lower slider notch of the slide seat and the guide rod to lock the slide seat.

26. The cutting apparatus according to claim 4, wherein the wiring device comprises:
a wiring device body, which comprises a movable wiring wheel; and
at least one pair of correction conductive pillars, which are spaced apart on the same side of the wiring wheel; wherein the conductive cutting wire passes between the at least one pair of correction conductive pillars, and each of the correction conductive pillars is connected to a correction circuit unit that can be conducted when the cutting wire deviates and comes into contact with the correction conductive pillar.

27. The cutting apparatus according to claim 2, wherein the spray device comprises:
an upper spray box, wherein the bottom of the upper spray box has a spray structure of the upper spray box;
a spray pipe for supplying the cutting liquid, wherein the spray pipe is arranged inside the upper spray box, and the bottom of the spray pipe has a spray structure of the spray pipe, which can communicate the spray pipe with the upper spray box; and
a lower spray box, wherein the lower spray box is connected to a lower side of the upper spray box, the lower spray box is communicated with the upper spray box through the spray structure of the upper spray box, and the bottom of the lower spray box has a spray structure of the lower spray box;
wherein the cutting liquid is sprayed onto the cutting wire network after passing through the spray structure of the spray pipe, the spray structure of the upper spray box, and the spray structure of the lower spray box in sequence.

28. The cutting apparatus according to claim 27, wherein the spray structure of the upper spray box is a spray hole of the upper spray box;
the spray structure of the spray pipe is a spray hole of the spray pipe;
the spray structure of the lower spray box is a spray hole of the lower spray box; and
an upper end of the lower spray box has a lower spray box opening, and the upper spray box and the lower spray box are communicated through the spray hole of the upper spray box and the lower spray box opening.

29. The cutting apparatus according to claim 1, wherein a front part of the cutting area frame is provided with a material inlet for charging a material charging table, and an auxiliary device for material charging that matches the material charging table is provided on the material inlet.

30. The cutting apparatus according to claim 29, wherein the auxiliary device for material charging comprises an installation bracket for material charging and at least one auxiliary rod for material charging, and the auxiliary rod for material charging is fixedly arranged on the cutting area frame through the installation bracket for material charging.

31. The cutting apparatus according to claim 1, further comprising a material blocking box arranged between two adjacent main cutting rollers; wherein the material blocking box comprises a material blocking frame and fixing brackets for material blocking; the fixing brackets for material blocking are arranged at opposite ends of the material blocking frame, and they are used to install the material blocking frame in a preset position; the material blocking frame comprises two first material blocking plates arranged opposite to each other, and the two first material blocking plates are fixedly connected to the fixing brackets for material blocking at opposite ends in the length direction respectively.
